(19) Europäisches Patentamt
European Patent Office
Office européen des brevets

(11) EP 4 436 978 B1

(12) EUROPEAN PATENT SPECIFICATION

(45) Date of publication and mention of the grant of the patent:
**03.09.2025 Bulletin 2025/36**

(21) Application number: **22822066.1**

(22) Date of filing: **24.11.2022**

(51) International Patent Classification (IPC):
***C07F 9/6574*** *(2006.01)* ***C09K 21/06*** *(2006.01)*
***C09K 21/12*** *(2006.01)*

(52) Cooperative Patent Classification (CPC):
**C07F 9/65744; C09K 21/12**

(86) International application number:
**PCT/EP2022/083139**

(87) International publication number:
**WO 2023/094526 (01.06.2023 Gazette 2023/22)**

(54) **PREPARATION PROCESS OF P(=O)-HETEROATOM DERIVATIVES OF DIBENZOOXAPHOSPHACYCLES**

HERSTELLUNGSVERFAHREN FÜR P(=O)-HETEROATOM-DERIVATE VON DIBENZOOXAPHOSPHACYCLEN

PROCÉDÉ DE PRÉPARATION DE DÉRIVÉS DE P(=O)-HÉTÉROATOME DE DIBENZOOXAPHOSPHACYCLES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.11.2021 EP 21383062**

(43) Date of publication of application:
**02.10.2024 Bulletin 2024/40**

(73) Proprietor: **AIMPLAS - Asociación de Investigación de Materiales Plásticos y Conexas**
**46980 Paterna Valencia (ES)**

(72) Inventors:
- **AGOSTINIS, Ludovico**
**46019 Valencia (ES)**
- **GHINCOLOV, Stefan**
**30175 Venezia (IT)**
- **BORTOLUZZI, Marco**
**32014 Ponte Nelle Alpi (IT)**

(74) Representative: **ZBM Patents - Zea, Barlocci & Markvardsen**
**Rambla de Catalunya, 123**
**08008 Barcelona (ES)**

(56) References cited:
**CN-B- 108 864 183 JP-A- 2001 139 586**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This application claims the benefit of European Patent Application 21383062.3 filed on November 24th, 2021.

## Technical Field

The present invention belongs to the field of Organic Phosphorus Flame Retardants (OPFRs), and particularly to a process for the preparation of P(=O)-heteroatom derivatives of dibenzooxaphosphacycles, such as 6H-dibenzo[c,e][1,2]oxaphosphinine 6-oxide (DOPO) and of dibenzo[d,f][1,3,2]dioxaphosphepine 6-oxide (BPPO). The invention also refers to a process for the preparation of flame retardant polymeric formulations containing it; and a process for the preparation of a flame retardant polymer using it as a monomer.

## Background Art

Phosphorus-based flame retardants (PFRs) are known and commercially produced from a long time, and they evolved with the advent of plastics into a wide range of inorganic and organic phosphorus additives and reactants. Flame retardant additives are incorporated during the polymerization process and react with the polymer only at elevated temperatures such as, for example, at the start of a fire. From an economic point of view, flame retardant additives are accessible. Unfortunately, due to the high quantity required to achieve the flame retardant effect, they can alter the mechanical characteristics of the polymer to which they are included, which can lead to an undesirable effect of "leaching" by the migration from the mass of polymer towards the surface, with the loss of flame retardant properties. Nevertheless, the flame retardant reactants (also named reactive flame retardants) interact with the polymer during the polymerization process or also in post-polymerization reaction processes being included in the backbone structure of the polymer. They are especially advantageous because smaller quantities, compared to FRs additives, are required for achieving the flame retardant effect and, therefore, the alteration of the mechanical properties of the polymer are minimal or null.

Due to the crescent restrictions to the use of halogen-based flame retardants from European commission since 2002, Organic Phosphorus Flame Retardants (OPFRs) are rising as one of the most promising alternatives for plastic fireproofing in a wide range of applications. Particularly, in the past few decades, the 6H-dibenzo[c,e][1,2]oxaphosphinine 6-oxide (also abbreviated as DOPO) and its derivatives aroused great interest because of their multiple structural diversifications (by functionalization) and good flame retardant effect in both gas and condensed phase.

In particular, DOPO's derivatives having a P(=O)-heteroatom bond (such as P-N and P-O bonds) have been widely used due to their suitable flame retardant properties. The main and classical synthetic pathway known for the preparation of such P(=O)-heteroatom DOPO derivatives is the so-called Atherton-Todd reaction. The Atherton-Todd reaction consists in the conversion of the P-H bond of DOPO into a P-Cl bond by the use of carbon tetrachloride ($CCl_4$) as chlorinating agent in the presence of an organic base (cf. F. R. Atherton et al. J. Chem. Soc., 1945, pp. 660). Particularly, this reaction involves the substitution of the H atom of DOPO with a Cl atom, making it eligible for being attacked by heteroatom-nucleophiles. Despite the good versatility and efficiency of the Atherton-Todd reaction, the fact that $CCl_4$ is carcinogen and also has an ozone-depleting and greenhouse gas effect (non-environmentally friendly) has induced its prohibition at an industrial use. In fact, its usage in Europe is restricted.

Due to the drawbacks of the Atherton-Todd reaction, the development of more efficient and green synthetic strategies for the preparation of P(=O)-heteroatom DOPO derivatives have been caused a big interest over the past decades.

In particular, the patent application JP2001139586 discloses a process for the preparation of 9,10-dihydro-10-hydroxy-9-oxa-10-phosphaphenanthrene 10-oxide (which is used as flame retardant) which comprises the reaction of DOPO with potassium iodide. However, JP2001139586 does not disclose a process for the preparation of P(=O)-heteroatom derivatives (II) of dibenzooxaphosphacycles using iodine as stoichiometric reagent.

One of these strategies involved the use of 6-chloro-6H-dibenzo[c,e][1,2]oxaphosphinine 6-oxide (DOPO-Cl) as starting raw material. However, it is a very reactive substance that requires a special handling hindering its industrial use. Other strategies involve the preparation of DOPO-Cl by the use of less toxic chlorinating agents such as thionyl chloride ($SOCl_2$), trichloroisocyanuric acid (TCCA) and N-chlorosuccinimide (NCS). Nonetheless, different (synthetic) challenges were encountered which limit their use industrially. In the case of $SOCl_2$, the reaction involves reacting $SOCl_2$ with 10-hydroxy-9,10-dihydro-9-oxa-10-phosphaphenanthrene-10-oxide (DOPOOH) as the starting material. However, this approach is time-consuming, as it first requires conversion of DOPO to DOPO-OH followed by its refluxing with $SOCl_2$ for 18 h. The process further comprises the removal of the unreacted $SOCl_2$ by distillation, which hinder again its industrial scale-up. In the case of TCCA, it was found that the reaction was very exothermic which makes it difficult to scale-up in industry. Moreover, NCS showed a highly efficient variability in relation to the type of P(=O)-heteroatom been prepared, which again is not very appropriate for its industrial preparation. Other strategies were focused on the use of $Cl_2$ gas as chlorinated agent. One of them involves the reaction of DOPO and chlorine gas. However, the hazardous handling of

chlorine gas again limits the industrial use, even when the in-situ evolution of chlorine gas is performed.

Finally, a process for the preparation of organic P(=O)-heteroatom derivatives of DOPO by light-induced iodine catalysed Atherton-Todd reaction was also disclosed in the state of the art. In particular, the patent application number CN108864183A discloses a process for the preparation of P(=O)-heteroatom derivatives of DOPO catalysed by visible light and performed in the presence of catalytic amount of iodine, sodium sulphate and hydrogen peroxide. However, again this process required long reaction times (about 24h) rendering a moderate chemical yield of the desirable DOPO derivative. Furthermore, the DOPO's derivatives thus obtained requires additional chromatographic purification methods, which again compromise its industrial usage.

Furthermore, dibenzo[d,f][1,3,2]dioxaphosphepine 6-oxide (BPPO) is a phosphonate compound described for the first time by Natchev ("Phosphorous and Sulphur and the Related Elements, 1988, vol. 37(3-4), pp.149-157) but considered as possible candidate as phosphorous flame retardant only recently (Lenz et al., "Tetrahedron", 2019, vol. 75, pp. 1306-1310). BPPO derivatives have been described, where P-C compounds have been synthesized by phospha-Michael additions or Pudovik reactions. Nevertheless, up to the date, as it has been disclosed for DOPO, BPPO phosphorous derivatives with heteroatoms have not yet been synthesized to avoid use of chlorinating agents.

Therefore, from what is known in the state of the art, there is still the need of providing an efficient, industrial, and environmentally friendly process for the development of P(=O)-heteroatom derivatives of dibenzooxaphosphacycles, particularly of DOPO and BPPO.

**Summary of Invention**

Inventors have found an efficient, industrial, and green process for the preparation of P(=O)-heteroatom derivatives (II) of dibenzooxaphosphacycles (I), such as DOPO (IA) and BPPO (IB), based on a simple one-pot functionalization of a Phosphorus atom of the DOPO or the BPPO by the use of iodine, the corresponding heteroatom containing reagent (III) at a specific molar ratio and a suitable proton scavenger compound (IX) in selected cases.

Particularly, inventors have found that when the oxidation reaction of the P atom of DOPO or BPPO is performed in the presence of 0.5 to 3 mols of iodine, the molar ratio between the DOPO or BPPO (I) and the heteroatom containing moiety (III) is from 1:1 to 1:5, if the proton scavenger compound (IX) is present, then the molar ratio between the DOPO or BPPO (I) and the proton scavenger compound (IX) is from 1:higher than 0 to 1:4, and the sum of the mols of the compounds of formula (III) and of the compound of the formula (IX) from 2.5 to 9, the corresponding P(=O)-heteroatom derivatives (II) of DOPO's and BPPO's dibenzooxaphosphacycles are obtained with high chemical yields and high purity.

Particularly, the process of the invention allows obtaining the P(=O) derivatives of DOPO and BPPO under mild conditions without the need of (chromatographic) purification process, which implies shortening the reactor occupation time and a high efficiency that the processes disclosed in the state of the art. Furthermore, the process of the invention does not involve the use of toxic and not recommended chlorinating agent such as $CCl_4$. In fact, the process of the invention can be performed by the use of green reagents and solvents.

Thus, the first aspect of the invention relates to a process for the preparation of a compound of formula (II)

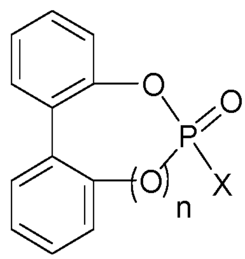

(II)

which comprises contacting a compound of formula (I)

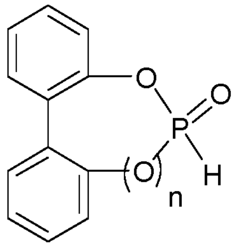

(I)

with a compound of formula (III)

X-H (III)

in the presence of iodine ($I_2$) and air;
and, optionally in the presence of one or more proton scavenger compound (IX)
wherein:

n is an integer selected from 0 and 1;
X is a heteroatom containing moiety, being the heteroatom directly bonded to the P atom; the heteroatom is selected from the group consisting of N and O;
the molar ratio between (I) and (III) is from 1:1 to 1:5;
if the compound of formula (IX) is present, the molar ratio between (I) and (IX) is from 1: higher than 0 to 1:4; being the sum of the mols of the compounds of formula (III) and of the compound of the formula (IX) from 2.5 to 9; and
the molar ratio between (I) and iodine is from 1:0.5 to 1:3.

It is also a part of the invention a process comprising: performing the process of the first aspect of the invention to obtain a compound of formula (II); and further preparing a flame retardant polymeric formulation containing one or more compounds of formula (II).

And also a process comprising: performing the process of the first aspect of the invention to obtain a compound of formula (II); and preparing a flame retardant polymer using the compound of formula (II) thus obtained as monomer for the preparation of the polymer.

## Detailed description of the invention

All terms as used herein in this application, unless otherwise stated, shall be understood in their ordinary meaning as known in the art. Other more specific definitions terms as used in the present application are as set forth below and are intended to apply uniformly throughout the specification and claims unless an otherwise expressly set out definition provides a broader definition.

For the purposes of the present invention, any ranges given include both the lower and the upper endpoints of the range. Ranges given, such as temperatures, times, weights, and the like, should be considered approximate, unless specifically stated. The term "about" or "around" as used herein refers to a range of values $\pm$ 10% of a specified value. For example, the expression "about 0.5" or "around 0.5" includes $\pm$ 10% of 0.5, i.e. from 0.45 to 0.55.

The term "percentage (%) by weight" refers to the percentage of each ingredient in relation to the total weight of the final mixture.

The terms "alkane" and "hydrocarbon" have the same meaning and are used interchangeable. They refer to a saturated, branched, or linear organic compound consisting entirely of hydrogen and carbon which contains the number of carbon atoms specified in the description or claims. The term "halogenated hydrocarbon" refers to a hydrocarbon as defined above, wherein at least one hydrogen is substituted with at least a halogen atom. The term "halogen" encompasses F, Cl, Br, and I. Examples of halogenated hydrocarbons include dichloromethane and dichloroethane.

The term "alkyl" refers to a saturated straight, or branched hydrocarbon chain which contains the number of carbon atoms specified in the description or claims. Examples include, among others, the group methyl, ethyl, propyl, isopropyl, butyl, isobutyl, sec-butyl, and tert-butyl.

The term "alkenyl" refers to a straight or branched hydrocarbon chain which contains the number of carbon atoms specified in the description or claims, and that also contains at least one double bond. Examples include, among others,

the ethenyl, 2-propenyl, and 1-propenyl.

The term "alkynyl" refers to a straight or branched hydrocarbon chain which contains the number of carbon atoms specified in the description or claims, and that also contains at least one triple bond.

The term "carbocyclic" ring refers to an aromatic, saturated or partially unsaturated cyclic alkane being each member of the cycle (ring) a carbon atom and containing the number of carbon atoms specified in the description or claims. Examples of carbocyclic rings include cyclopentane and cyclohexane.

The term "heterocyclic" ring refers to a "carbocyclic" compound in that at least one carbon atom is substituted by a N, NH, or O atom and containing the number of carbon atoms specified in the description or claims. Examples of heterocyclic rings include tetrahydrofuran, tetrahydropyran, morpholine, and piperazine.

The term "heteroatom containing moiety" refers to an organic moiety comprising at least one heteroatom specified in the description or claims, and wherein the heteroatom is directly attached to the phosphorous atom of the dibenzooxaphosphacycles DOPO or BPPO. For the purpose of the invention the heteroatoms are N or O.

For the purpose of the present invention, the term "molar ratio" has been used to express the proportion of reactants that are used in the process. The molar ratios identify how many moles of product are formed from a certain amount of reactant, as well as the number of moles of a reactant needed to completely react with a certain amount of another reactant.

The term "mol" is the unit of measurement for amount of substance in the International System of Units (SI). The mole of a chemical compound in a solution (reaction medium of the process of the invention) can be calculated by the following equation:

$$\text{mole} = \text{mass} / \text{molecular weight}$$

As it is mentioned above, the process of the first aspect of the invention comprises contacting the compounds based on dibenzooxaphosphacycles of formula (I), such as 6H-dibenzo[c,e][1,2]oxaphosphinine 6-oxide (DOPO) and of dibenzo[d,f][1,3,2]dioxaphosphepine 6-oxide (BPPO), with a compound X-H of formula (III) in the presence of iodine ($I_2$) and air; and, optionally in the presence of one or more proton scavenger compound (IX) wherein: X is a heteroatom containing moiety, being the heteroatom directly bonded to the P atom; the molar ratio between the compound of formula (I) and (III) is from 1:1 to 1:5; if the compound of formula (IX) is present, the molar ratio between the compound of formula (I) and (IX) is from 1:higher than 0 to 1:4; being the sum of the mols of the compounds of formula (III) and of the compound of the formula (IX) from 2.5 to 9; and the molar ratio between (I) and iodine is from 1:0.5 to 1:3.

In an embodiment, the process is one wherein: molar ratio between the compound of formula (I) and (III) is from 1:1 to 1:5; if the compound of formula (IX) is present, the molar ratio between the compound of formula (I) and (IX) is from 1: higher than 0 to 1:4; the sum of the mols of the compounds of formula (III) and of the compound of the formula (IX) is from 2.5 to 5; and the molar ratio between (I) and iodine is from 1:0.5 to 1:3.

In an embodiment, the process is one wherein: the molar ratio between the compound of formula (I) and (III) is from 1:1 to 1:5; if the compound of formula (IX) is present, the molar ratio between the compound of formula (I) and (IX) is from 1: higher than 0 to 1:4; the sum of the mols of the compounds of formula (III) and of the compound of the formula (IX) is from 2.5 to 9; and the molar ratio between (I) and iodine is from 1:0.5 to 1:2.

In an embodiment, the process is one wherein: the molar ratio between the compound of formula (I) and (III) is from 1:1 to 1:5; if the compound of formula (IX) is present, the molar ratio between the compound of formula (I) and (IX) is from 1: higher than 0 to 1:4; the sum of the mols of the compounds of formula (III) and of the compound of the formula (IX) is from 2.5 to 5; and the molar ratio between (I) and iodine is from 1:0.5 to 1:2.

In an embodiment, the process is performed in the absence of one or more proton scavenger compound (IX). In an embodiment, the process is one wherein the heteroatom is N and the process is performed in the absence of one or more proton scavenger compound (IX). In an embodiment, the process is one wherein: the heteroatom is N; the molar ratio between the compound of formula (I) and (III) is from 1:2.5 to 1:5; the compound of formula (IX) is not present; and the molar ratio between the compound of formula (I) and iodine is from 1:0.5 to 1:3. In an embodiment, the process is one wherein: the heteroatom is N; the molar ratio between the compound of formula (I) and (III) is from 1:2.5 to 1:5; the compound of formula (IX) is not present; and the molar ratio between the compound of formula (I) and iodine is from 1:0.5 to 1:2. In an embodiment, the process is one wherein: the heteroatom is N; the molar ratio of the compound of formula (I) and (III) are about 1:3; the compound of formula (IX) is not present; and the molar ratio between the compound of formula (I) and iodine is about 1:1.

In an embodiment, the process is performed in the presence of one or more proton scavenger compound (IX).

In an embodiment, the process is one wherein the heteroatom is N and is performed in the presence of one or more proton scavenger compound (IX). In an embodiment, the process is one wherein: the heteroatom is N; the molar ratio of the compound of formula (I) and (III) is from 1:1 to 1:5; the molar ratio of the compound of formula (I) and (IX) is from 1:higher than 0 to 1:4; the sum of the mols of the compounds of formula (III) and of the compound of the formula (IX) is from 2.5 to 9; and the molar ratio of the compound of formula (I) and iodine is from 1:0.5 to 1:3. In an embodiment, the process is

one wherein: the heteroatom is N; the molar ratio of the compound of formula (I) and (III) is from 1:1 to 1:5; the molar ratio of the compound of formula (I) and (IX) is from 1:higher than 0 to 1:4; the sum of the mols of the compounds of formula (III) and of the compound of the formula (IX) is from 2.5 to 5; and the molar ratio of the compound of formula (I) and iodine is from 1:0.5 to 1:2. In an embodiment, the process is one wherein: the heteroatom is N; the molar ratio of the compound of formula (I) and (III) is from 1:1 to 1:3; the molar ratio of the compound of formula (I) and (IX) is 1:2; the sum of the mols of the compounds of formula (III) and of the compound of the formula (IX) is from 3 to 5; and the molar ratio of the compound of formula (I) and iodine is from 1:0.5 to 1:2. In an embodiment, the process is one wherein: the heteroatom is N; the molar ratio of the compound of formula (I) and (III) is about 1:1; the molar ratio of the compound of formula (I) and (IX) is about 1:2; and the molar ratio of the compound of formula (I) and iodine is from 1:0.5 to 1:2. In an embodiment, the process is one wherein: the heteroatom is N; the molar ratio of the compound of formula (I) and (III) is from 1:higher than 1 to 1:3; the molar ratio of the compound of formula (I) and (IX) is about 1:2; the sum of the mols of the compounds of formula (III) and of the compound of the formula (IX) is from higher than 3 to 5; and the molar ratio of the compound of formula (I) and iodine is from 1:0.5 to 1:2.

In an embodiment, the process is one wherein the heteroatom is O and is performed in the presence of one or more proton scavenger compound (IX). In an embodiment, the process is one wherein: the heteroatom is O; the molar ratio of the compound of formula (I) and (III) is from 1:1 to 1:5; the molar ratio of the compound of formula (I) and (IX) is from 1:higher than 0 to 1:4; the sum of the mols of the compounds of formula (III) and of the compound of the formula (IX) is from 2.5 to 9; and the molar ratio of the compound of formula (I) and iodine is from 1:0.5 to 1:3. In an embodiment, the process is one wherein: the heteroatom is O; the molar ratio of the compound of formula (I) and (III) is from 1:1 to 1:5; the molar ratio of the compound of formula (I) and (IX) is from 1:higher than 0 to 1:4; the sum of the mols of the compounds of formula (III) and of the compound of the formula (IX) is from 2.5 to 5; and the molar ratio of the compound of formula (I) and iodine is from 1:0.5 to 1:2. In an embodiment, the process is one wherein: the heteroatom is O; the molar ratio of the compound of formula (I) and (III) is from 1:1 to 1:3; the molar ratio of the compound of formula (I) and (IX) is 1:2; the sum of the mols of the compounds of formula (III) and of the compound of the formula (IX) is from 3 to 5; and the molar ratio of the compound of formula (I) and iodine is from 1:0.5 to 1:2. In an embodiment, the process is one wherein: the heteroatom is O; the molar ratio of the compound of formula (I) and (III) is about 1:1; the molar ratio of the compound of formula (I) and (IX) is about 1:2; and the molar ratio of the compound of formula (I) and iodine is from 1:0.5 to 1:2. In an embodiment, the process is one wherein: the heteroatom is O; the molar ratio of the compound of formula (I) and (III) is from 1:higher than 1 to 1:3; the molar ratio of the compound of formula (I) and (IX) is about 1:2; the sum of the mols of the compounds of formula (III) and of the compound of the formula (IX) is from higher than 3 to 5; and the molar ratio of the compound of formula (I) and iodine is from 1:0.5 to 1:2.

The terms "scavenger" and "scavenger compound" have the same meaning and they are used interchangeable. They refer in chemistry to a chemical substance added to a mixture in order to remove or de-activate impurities and/or unwanted reaction products. Particularly, "proton scavenger" refers to a chemical substance added to a mixture capable of removing protons ($H^+$).

In an embodiment, the process is one wherein, if present, the proton scavenger compound (IX) is selected from the group consisting of carbonates salts, bicarbonate salts, amines, and a mixture thereof. In an embodiment, the process is one wherein, if present, the proton scavenger compound (IX) is an amine. In an embodiment, the process is one wherein, if present, the proton scavenger compound (IX) is an amine of formula $NR_5R_6R_7$, wherein: each $R_5$, $R_6$ and $R_7$ are independently selected from the group consisting of H; $(C_1\text{-}C_6)$alkyl; $(C_2\text{-}C_6)$alkenyl; $(C_2\text{-}C_6)$alkynyl, $(C_1\text{-}C_6)$alkylene-Cy1; $(C_2\text{-}C_6)$alkenylene-Cy1; $(C_2\text{-}C_6)$alkynylene-Cy1; and Cy1;

being Cy1 a known ring system selected from the group consisting of 5- to 7-membered saturated or partially unsaturated carbocyclic or heterocyclic ring; and 5- or 12-membered carbocyclic or heterocyclic aromatic ring; being optionally substituted with one or more groups selected from the group consisting of $(C_1\text{-}C_6)$alkyl, $(C_2\text{-}C_6)$alkenyl, $(C_2\text{-}C_6)$alkynyl, Cy1, -CO-O$(C_1\text{-}C_6)$alkyl, -O-$(C_1\text{-}C_6)$alkyl, -CO-$NH_2$, -CO-$NHR_8$, -O-CO-O-$(C_1\text{-}C_6)$alkyl, -N-CO-O-$(C_1\text{-}C_6)$alkyl, acrylate, methacrylate, and -$(C_2\text{-}C_6)$epoxy;

being optionally substituted with one or more groups selected from the group consisting of $(C_1\text{-}C_6)$alkyl, Cy1, and halogen;

or alternatively, $R_5$, $R_6$ and $R_7$ together with the nitrogen atom form a Cy4 being the Cy4 a ring system comprising from 1 to 3 rings being each of the rings a 5- to 7- membered aromatic ring, optionally substituted with one or more groups selected from the group consisting of $(C_1\text{-}C_6)$alkyl, $(C_2\text{-}C_6)$alkenyl, $(C_2\text{-}C_6)$alkynyl, $(C_1\text{-}C_6)$alkyl, $(C_2\text{-}C_6)$alkenyl, $(C_2\text{-}C_6)$alkynyl and Cy1; with the proviso that at least one of $R_5$, $R_6$ and $R_7$ is other than H. In an embodiment, the proton scavenger is selected from the group consisting of triethylamine, imidazole and carbazole. In an embodiment, the process is performed in the presence of one or more proton scavenger compounds of formula (IX) triethylamine; and in a molar ratio between the compound of formula (I) and the compound of formula (IX) from 1:higher than 0 to 1:4.

In an embodiment, the process is one wherein:

X is a moiety selected from the group consisting of $-NR_1R_2$ (IV), and $-OR_4$ (V);
$R_1$ is selected from the group consisting of H, $(C_1-C_6)$alkyl; $(C_2-C_6)$alkenyl; $(C_2-C_6)$alkynyl, $(C_1-C_6)$alkylene-Cy1; $(C_2-C_6)$alkenylene-Cy1; $(C_2-C_6)$alkynylene-Cy1; and Cy1; being optionally substituted with one or more groups selected from the group consisting of $(C_1-C_6)$alkyl, $(C_2-C_6)$alkenyl, $(C_2-C_6)$alkynyl, Cy1, -CO-O$(C_1-C_6)$alkyl, -O-$(C_1-C_6)$alkyl, -CO-$NH_2$, -CO-$NHR_8$, -O-CO-O-$(C_1-C_6)$alkyl, -N-CO-O-$(C_1-C_6)$alkyl, acrylate, methacrylate, and -$(C_2-C_6)$epoxy;
$R_2$ is selected from the group consisting of $(C_1-C_6)$alkyl; $(C_2-C_6)$alkenyl; $(C_2-C_6)$alkynyl, $(C_1-C_6)$alkylene-Cy1; $(C_2-C_6)$alkenylene-Cy1; $(C_2-C_6)$alkynylene-Cy1; and Cy1; being optionally substituted with one or more groups selected from the group consisting of $(C_1-C_6)$alkyl, $(C_2-C_6)$alkenyl, $(C_2-C_6)$alkynyl, Cy1, -CO-O$(C_1-C_6)$alkyl, -O-$(C_1-C_6)$alkyl, -CO-$NH_2$, -CO-$NHR_8$, -O-CO-O-$(C_1-C_6)$alkyl, -N-CO-O-$(C_1-C_6)$alkyl, acrylate, methacrylate, and -$(C_2-C_6)$epoxy;
$R_8$ is selected from the group consisting of $(C_1-C_6)$alkyl, and amino protecting group; or alternatively, $R_1$ and $R_2$ together with the nitrogen atom form a Cy2;
$R_4$ is selected from the group consisting of $(C_1-C_6)$alkyl; $(C_2-C_6)$alkenyl; $(C_2-C_6)$alkynyl, $(C_1-C_6)$alkylene-Cy1; $(C_2-C_6)$alkenylene-Cy1; $(C_2-C_6)$alkynylene-Cy1; $(C_2-C_6)$alkylene-O-CO-$(C_2-C_6)$alkenyl; $(C_2-C_6)$alkylene-O-CO-(Cy1); and Cy1; being optionally substituted with one or more groups selected from the group consisting of $(C_1-C_6)$alkyl, $(C_2-C_6)$alkenyl, $(C_2-C_6)$alkynyl, Cy1, -CO-O$(C_1-C_6)$alkyl, -O-$(C_1-C_6)$alkyl, -CO-$NH_2$, -CO-$NHR_8$, -O-CO-O-$(C_1-C_6)$alkyl, -N-CO-O-$(C_1-C_6)$alkyl, acrylate, methacrylate, and -$(C_2-C_6)$epoxy;
Cy1 is a known ring system selected from the group consisting of 5- to 7-membered saturated or partially unsaturated carbocyclic or heterocyclic ring; and 5- or 12-membered carbocyclic or heterocyclic aromatic ring; being optionally substituted with one or more groups selected from the group consisting of $(C_1-C_6)$alkyl, $(C_2-C_6)$alkenyl, $(C_2-C_6)$alkynyl, Cy1, -CO-O$(C_1-C_6)$alkyl, -O-$(C_1-C_6)$alkyl, -CO-$NH_2$, -CO-$NHR_8$, -O-CO-O-$(C_1-C_6)$alkyl, -N-CO-O-$(C_1-C_6)$alkyl, acrylate, methacrylate, and -$(C_2-C_6)$epoxy; and
Cy2 is a known ring system selected from the group consisting of 5- to 7-membered saturated, partially unsaturated, or aromatic heterocyclic ring, being optionally substituted with one or more groups selected from the group consisting of $(C_1-C_6)$alkyl, $(C_2-C_6)$alkenyl, $(C_2-C_6)$alkynyl, Cy1, -CO-O$(C_1-C_6)$alkyl, -O-$(C_1-C_6)$alkyl, -CO-$NH_2$, -CO-$NHR_8$, -O-CO-O-$(C_1-C_6)$alkyl, -N-CO-O-$(C_1-C_6)$alkyl, acrylate, methacrylate, and -$(C_2-C_6)$epoxy; and
$R_8$ is selected from the group consisting of $(C_1-C_6)$alkyl, and amino protecting group.

The terms "amino protecting group" refers to any group which is capable of reversibly protecting the amine nitrogen atom functionality. For the purpose of the invention, any nitrogen protecting group disclosed in the state of the is appropriate for the present invention. Examples of nitrogen protecting group can be found in Green and P. G. M. Wuts, Protective Groups in Organic Chemistry (Wiley, 3rd ed. 1999, Chapter 7, pp. 495-653).

The process of the invention is advantageous because it is a versatile process that allows preparing compounds of formula (II) having the P(=O)-N bond (i.e. phosphoramidates); and P(=O)-O bond (i.e. phosphate esters), when X is N (i.e. amine), and X is O (i.e. alcohol), respectively.

In an embodiment, the process is one wherein X is $-NR_1R_2$ (IV) as defined herein above, and thereby the compound of formula (II) is a compound of formula (II)-1:

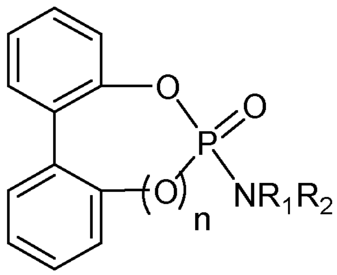

(II)-1

In an embodiment, the process is one wherein:

n Is 0;
X is $-NR_1R_2$ (IV) as defined herein above; and,
thereby the compound of formula (II) is a compound of formula (IIA)-1:

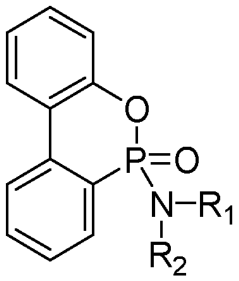

(IIA)-1

In an embodiment, the process is one wherein:

n Is 1;
X is $-NR_1R_2$ (IV) as defined herein above; and,
thereby the compound of formula (II) is a compound of formula (IIB)-1:

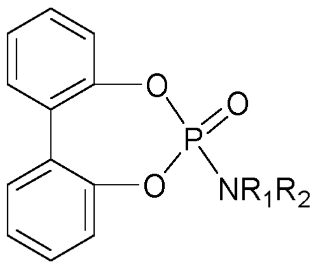

(IIB)-1

In an embodiment, the process is one wherein:

X is $-NR_1R_2$ (IV);
$R_1$ is selected from the group consisting of H, $(C_1-C_6)$alkyl; $(C_2-C_6)$alkenyl; $(C_2-C_6)$alkynyl, $(C_1-C_6)$alkylene-Cy1; $(C_2-C_6)$alkenylene-Cy1; $(C_2-C_6)$alkynylene-Cy1; and Cy1; being optionally substituted with one or more groups selected from the group consisting of $(C_1-C_6)$alkyl, $(C_2-C_6)$alkenyl, $(C_2-C_6)$alkynyl, Cy1, -CO-O$(C_1-C_6)$alkyl, -O-$(C_1-C_6)$alkyl, $-CO-NH_2$, $-CO-NHR_8$, -O-CO-O-$(C_1-C_6)$alkyl, -N-CO-O-$(C_1-C_6)$alkyl, acrylate, methacrylate, and -$(C_2-C_6)$epoxy;
$R_2$ is selected from the group consisting of $(C_1-C_6)$alkyl; $(C_2-C_6)$alkenyl; $(C_2-C_6)$alkynyl, $(C_1-C_6)$alkylene-Cy1; $(C_2-C_6)$alkenylene-Cy1; $(C_2-C_6)$alkynylene-Cy1; and Cy1; being optionally substituted with one or more groups selected from the group consisting of $(C_1-C_6)$alkyl, $(C_2-C_6)$alkenyl, $(C_2-C_6)$alkynyl, Cy1, -CO-O$(C_1-C_6)$alkyl, -O-$(C_1-C_6)$alkyl, $-CO-NH_2$, $-CO-NHR_8$, -O-CO-O-$(C_1-C_6)$alkyl, -N-CO-O-$(C_1-C_6)$alkyl, acrylate, methacrylate, and -$(C_2-C_6)$epoxy;
Cy1 is a known ring system selected from the group consisting of 5- to 7-membered saturated or partially unsaturated carbocyclic or heterocyclic ring; and 5- or 12-membered carbocyclic or heterocyclic aromatic ring; being optionally substituted with one or more groups selected from the group consisting of $(C_1-C_6)$alkyl, $(C_2-C_6)$alkenyl, $(C_2-C_6)$alkynyl, Cy1, -CO-O$(C_1-C_6)$alkyl, -O-$(C_1-C_6)$alkyl, $-CO-NH_2$, $-CO-NHR_8$, -O-CO-O-$(C_1-C_6)$alkyl, -N-CO-O-$(C_1-C_6)$alkyl, acrylate, methacrylate, and -$(C_2-C_6)$epoxy; and
$R_8$ is selected from the group consisting of $(C_1-C_6)$alkyl, and amino protecting group.

In an embodiment, the process is one wherein:

X is $-NR_1R_2$ (IV);
$R_1$ is selected from the group consisting of H and $(C_1-C_6)$alkyl; and
$R_2$ is Cy1 as defined above.

In an embodiment, the process is one wherein:

X is $-NR_1R_2$ (IV);
$R_1$ is H;
$R_2$ is Cy1; and
Cy1 a phenyl ring or benzyl ring, optionally substituted with one or more groups selected from the group consisting of $(C_1-C_6)$alkyl, $(C_2-C_6)$alkenyl, $(C_2-C_6)$alkynyl, Cy1, $-CO-O(C_1-C_6)$alkyl, $-O-(C_1-C_6)$alkyl, $-CO-NH_2$, $-CO-NHR_8$, $-O-CO-O-(C_1-C_6)$alkyl, $-N-CO-O-(C_1-C_6)$alkyl, acrylate, methacrylate, and $-(C_2-C_6)$epoxy; and
$R_8$ is as defined above.

In an embodiment, the process is one wherein:

X is $-NR_1R_2$ (IV);
$R_1$ is $(C_1-C_6)$alkyl;
$R_2$ is Cy1; and
Cy1 a phenyl ring or benzyl ring, optionally substituted with one or more groups selected from the group consisting of $(C_1-C_6)$alkyl, $(C_2-C_6)$alkenyl, $(C_2-C_6)$alkynyl, Cy1, $-CO-O(C_1-C_6)$alkyl, $-O-(C_1-C_6)$alkyl, $-CO-NH_2$, $-CO-NHR_8$, $-O-CO-O-(C_1-C_6)$alkyl, $-N-CO-O-(C_1-C_6)$alkyl, acrylate, methacrylate, and $-(C_2-C_6)$epoxy; and
$R_8$ is as defined above.

In an embodiment, the process is one wherein:

X is $-NR_1R_2$ (IV)
$R_1$ and $R_2$ together with the nitrogen atom form a Cy2; and
Cy2 is a known ring system selected from the group consisting of 5- to 7-membered saturated, partially unsaturated, or aromatic heterocyclic ring, being optionally substituted with one or more groups selected from the group consisting of $(C_1-C_6)$alkyl, $(C_2-C_6)$alkenyl, $(C_2-C_6)$alkynyl, Cy1, $-CO-O(C_1-C_6)$alkyl, $-O-(C_1-C_6)$alkyl, $-CO-NH_2$, $-CO-NHR_8$, $-O-CO-O-(C_1-C_6)$alkyl, $-N-CO-O-(C_1-C_6)$alkyl, acrylate, methacrylate, and $-(C_2-C_6)$epoxy;
$R_8$ is selected from the group consisting of $(C_1-C_6)$alkyl, and amino protecting group;
and Cy1 as defined above.

In an embodiment, the process is one wherein:

X is $-NR_1R_2$ (IV)
$R_1$ and $R_2$ together with the nitrogen atom form a Cy2; and
Cy2 is a 5- to 7-membered saturated or partially unsaturated heterocyclic ring, optionally substituted with one or more groups selected from the group consisting of $(C_1-C_6)$alkyl, $(C_2-C_6)$alkenyl, $(C_2-C_6)$alkynyl, Cy1, $-CO-O(C_1-C_6)$alkyl, $-O-(C_1-C_6)$alkyl, $-CO-NH_2$, $-CO-NHR_3$, $-O-CO-O-(C_1-C_6)$alkyl, $-N-CO-O-(C_1-C_6)$alkyl, acrylate, methacrylate, and $-(C_2-C_6)$epoxy;
$R_8$ is selected from the group consisting of $(C_1-C_6)$alkyl, and amino protecting group;
and Cy1 as defined above.

In an embodiment, the process is one wherein:

X is $-NR_1R_2$ (IV)
$R_1$ and $R_2$ together with the nitrogen atom form a Cy2; and
Cy2 is selected from the group consisting of morpholine, piperazine, piperidine, and pyrrolidine.

In an embodiment, the process is one wherein:

X is N;
the process is performed in the presence of a proton scavenger compound (IX);
and the compound of formula (III) (i.e., $HNR_1R_2$) and the compound of formula (IX) ($NR_5R_6R_7$) are equal.

In an embodiment, the process is one wherein:

X is N;
the process is performed in the presence of a proton scavenger compound (IX);
and the compound of formula (III) (i.e., $HNR_1R_2$) and the compound of formula (IX) ($NR_5R_6R_7$) are not equal.

In an embodiment, the process is one wherein X is $-OR_4$ (V) and thereby the compound of formula (II) is a compound of formula (II)-2:

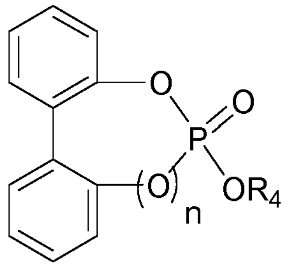

(II)-2

In an embodiment, the process is one wherein:

n Is 0;
X is $-OR_4$ (V) as defined herein above; and,
thereby the compound of formula (II) is a compound of formula (IIA)-2:

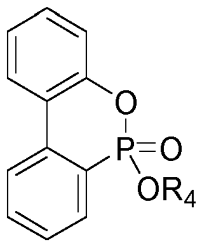

(IIA)-2

In an embodiment, the process is one wherein:

n Is 1;
X is $-OR_4$ (V) as defined herein above; and,
thereby the compound of formula (II) is a compound of formula (IIB)-2:

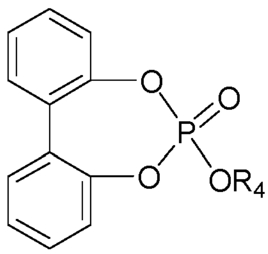

(IIB)-2

In an embodiment, the process is one wherein X is $-OR_4$ (V) and $R_4$ is selected from the group consisting of $(C_1-C_6)$alkyl; $(C_2-C_6)$alkenyl; $(C_2-C_6)$alkynyl, $(C_1-C_6)$alkylene-Cy1; $(C_2-C_6)$alkenylene-Cy1; $(C_2-C_6)$alkynylene-Cy1; $(C_2-C_6)$alkylene-O-CO-$(C_2-C_6)$alkenyl; $(C_2-C_6)$alkylene-O-CO-(Cy1); and Cy1; being optionally substituted with one or more groups selected from the group consisting of $(C_1-C_6)$alkyl, $(C_2-C_6)$alkenyl, $(C_2-C_6)$alkynyl, Cy1, - CO-O$(C_1-C_6)$ alkyl, -O-$(C_1-C_6)$alkyl, $-CO-NH_2$, $-CO-NHR_8$, -O-CO-O-$(C_1-C_6)$alkyl, -N-CO-O-$(C_1-C_6)$alkyl, acrylate, methacrylate, and -$(C_2-C_6)$epoxy;

Cy1 is a known ring system selected from the group consisting of 5- to 7-membered saturated or partially unsaturated

carbocyclic or heterocyclic ring; and 5- or 12-membered carbocyclic or heterocyclic aromatic ring; being optionally substituted with one or more groups selected from the group consisting of $(C_1-C_6)$alkyl, $(C_2-C_6)$alkenyl, $(C_2-C_6)$alkynyl, Cy1, -CO-O$(C_1-C_6)$alkyl, -O-$(C_1-C_6)$alkyl, -CO-$NH_2$, -CO-$NHR_8$, -O-CO-O-$(C_1-C_6)$alkyl, -N-CO-O-$(C_1-C_6)$alkyl, acrylate, methacrylate, and -$(C_2-C_6)$epoxy; and

$R_8$ is selected from the group consisting of $(C_1-C_6)$alkyl, and amino protecting group.

In an embodiment, the process is one wherein:

X is -$OR_4$ (V); and

$R_4$ is selected from the group consisting of $(C_1-C_6)$alkyl, $(C_2-C_6)$alkenyl, $(C_2-C_6)$alkenylene-Cy1, $(C_2-C_6)$alkylene-O-CO-$(C_2-C_6)$alkenyl; and $(C_2-C_6)$alkylene-O-CO-(Cy1).

In an embodiment, the process is one wherein:

X is -$OR_4$ (V); and

$R_4$ is selected from the group consisting of $(C_1-C_6)$alkyl; and $(C_2-C_6)$alkenyl.

In an embodiment, the process is one wherein:

X is -$OR_4$ (V); and

$R_4$ is selected from the group consisting of $(C_2-C_6)$alkylene-O-CO-$(C_2-C_6)$alkenyl; and $(C_2-C_6)$alkylene-O-CO-(Cy1).

In an embodiment, the process is one wherein:

X is -$OR_4$ (V); and

$R_4$ is selected from the group consisting of methyl, ethyl, isopropyl, 2-propenyl, 4-vinylphenyl, and ethylene(meth) acrylate.

In an embodiment, the process is one which is performed in the presence of one or more solvents selected from the group consisting of halogenated $(C_1-C_6)$alkane, $(C_1-C_4)$alkyl-CO-O-$(C_1-C_4)$alkyl; $(C_1-C_4)$alkyl-O-$(C_1-C_4)$alkyl; $(C_1-C_6)$alkane-CN; and Cy3; wherein: Cy3 is selected from the group consisting of 5- to 7-membered saturated or partially unsaturated heterocyclic ring being at least one of the unit members an Oxygen unit member; being the alkane, the alkyl, and any carbon unit member of Cy3 optionally substituted with one or more groups selected from the group consisting of $(C_1-C_6)$alkyl, $(C_2-C_6)$alkenyl, $(C_2-C_6)$alkynyl, halogen and cyanide. In an embodiment, the process is one which is performed in the presence of one or more solvents selected from the group consisting of dichloromethane, dichloroethane, chloroform, ethyl acetate, acetonitrile, tetrahydrofuran, 2-methyltetrahydrofuran and a mixture thereof. In an embodiment, the process is one which is performed in the presence of dichloromethane. In an embodiment, the process is one which is performed in the presence of tetrahydrofuran, 2-methyltetrahydrofuran or a mixture thereof; particularly 2-methyltetrahydrofuran.

In an embodiment, the process is one which is performed at a temperature from -20°C to 50°C; particularly at a temperature from 0°C to 25°C. In an embodiment, the process is one which is performed for a period of time from 0.5 minutes to 5 hours; particularly from 0.5 min to 3 hours. In an embodiment, the process is one which is performed at a temperature from -20°C to 50°C and for a period of time from 0.5 to 5 hours; particularly at a temperature from 0°C to 25°C and for a period of time from 0.5 min to 3 hours.

In an embodiment, the process renders the compound of formula (II) with a chemical yield equal to or higher than 50% by weight. In an embodiment, the process renders the compound of formula (II) with a chemical yield equal to or higher than 60% by weight. In an embodiment, the process renders the compound of formula (II) with a chemical yield equal to or higher than 70% by weight. In an embodiment, the process renders the compound of formula (II) with a chemical yield equal to or higher than 75% by weight. In an embodiment, the process renders the compound of formula (II) with a chemical yield equal to or higher than 80% by weight. In an embodiment, the process renders the compound of formula (II) with a chemical yield equal to or higher than 85% by weight. In an embodiment, the process renders the compound of formula (II) with a chemical yield equal to or higher than 90% by weight.

In an embodiment, the process renders a compound of formula (II) having a chemical purity equal to or higher than 90%. In an embodiment, the process renders a compound of formula (II) having a chemical purity equal to or higher than 95%. In an embodiment, the process renders a compound of formula (II) having a chemical purity equal to or higher than 95%. For the purpose of the present invention, the chemical purity of the compound of formula (II) obtained by the process of the first aspect of the invention is measured by Nuclear Magnetic Spectroscopy (NMR).

In an embodiment, the process renders the compound of formula (II) with a chemical yield equal to or higher than

50% by weight, and the process renders a compound of formula (II) having a chemical purity equal to or higher than 90% measured by NMR.

In an embodiment, the process renders the compound of formula (II) with a chemical yield equal to or higher than 60% by weight, and the process renders a compound of formula (II) having a chemical purity equal to or higher than 90% measured by NMR.

In an embodiment, the process renders the compound of formula (II) with a chemical yield equal to or higher than 70% by weight, and the process renders a compound of formula (II) having a chemical purity equal to or higher than 90% measured by NMR.

In an embodiment, the process renders the compound of formula (II) with a chemical yield equal to or higher than 80% by weight, and the process renders a compound of formula (II) having a chemical purity equal to or higher than 90% measured by NMR.

In an embodiment, the process renders the compound of formula (II) with a chemical yield equal to or higher than 90% by weight, and the process renders a compound of formula (II) having a chemical purity equal to or higher than 90% measured by NMR.

In an embodiment, the process of the first aspect of the invention further comprising and additional step (i) for the preparation of polymeric formulations containing one or more of the compounds of formula (II). The polymeric formulations thus obtained has flame retardant properties. The appropriate polymer and the compound of formula (II), their amounts as well as the experimental process conditions for their preparation of the formulations, can readily be determined by those skilled in the art according to the field and the type of polymeric formulation being prepared.

In an embodiment, the polymeric formulation is a thermoplastic polymeric formulation, and then step (i) is step (i') which comprises mixing one or more compounds of formula (II) with one or more thermoplastic polymers, and optionally one or more carriers or excipients. This process is commonly known as "compounding". The term "compounding" refers to a process which comprises the mixture of thermoplastic polymers and optionally other ingredients such as excipients and/or carriers in a molten state. The appropriate polymer thermoplastic polymer and the compound of formula (II), their amounts as well as the experimental process conditions (compounding conditions) for their preparation, can readily be determined by those skilled in the art according to the field and the type of thermoplastic polymeric formulation being prepared. In an embodiment, the process is one wherein the amount of the one or more compounds of formula (II) in the thermoplastic polymeric formulation is from 5 to 30% by weight; particularly, from 5 to 10% by weight. In an embodiment, the process is one wherein the thermoplastic polymer is selected from the group consisting of poly($C_2$-$C_8$)alkene based polymer, polyester based polymer, polyamine based polymer, polyol based polymer, polyurethane based polymer, polyolefin based polymer, poly(metha)acrylate based polymer, polyamide based polymer, and polycarbonate based polymer. In an embodiment, the process is one wherein the thermoplastic polymeric is a poly($C_2$-$C_8$)alkene based polymer selected from the group consisting of polyethylene based polymer, polypropylene based polymer, and polystyrene based polymer. In an embodiment, the process is one wherein the thermoplastic polymeric is a poly($C_2$-$C_8$)alkene based polymer being a polystyrene based polymer selected from the group consisting of polystyrene, polystyrene-acrylonitrile (SAN) and polyacrylonitrile-butadiene-styrene (ABS). In an embodiment, the process is one wherein the thermoplastic polymeric is a polyester based polymer selected from the group consisting of polyethylene terephthalate based polymer, polylactic acid based polymer and polyhydroxy($C_1$-$C_6$)alkanoate based polymer. The reaction conditions of the compounding step (i') as defined above are well known for the skill in the art. All methods disclosed in the state of the art for the preparation of polymeric thermoplastic formulation by compounding are appropriate for the present invention. Typically, step (i') includes an extrusion step. Commonly, the compounding step (i') is performed at a temperature from 150 °C to 400 °C and from 0.1 minutes to 10 minutes; In an embodiment, the compounding process (i') is one wherein the thermoplastic polymer is polyethylene and step (i') is performed at a temperature from 140°C to 200°C and from 0.5 minutes to 3 minutes.

In an embodiment, the polymeric formulation is a thermostable polymeric formulation, and then step (i) is step (i") which comprises polymerising the thermostable polymer in the presence of one or more compounds of formula (II). The "thermostable polymeric formulation" thus obtained is also called "composite formulation". The appropriate monomeric units, and the compound of formula (II), their amounts as well as the experimental process conditions for their preparation, can readily be determined by those skilled in the art according to the field and the type of "composite formulation" being prepared. Typically, (i") comprises firstly, providing a mixture of the corresponding monomeric units of the resulting thermostable polymer with one or more compounds of formula (II) (i.e. the mixing step); and secondly, submitting the mixture thus obtained under such polymerising reaction conditions to obtain the thermostable polymeric formulation (i.e. the polymerizing step). For the purpose of the invention, the terms "polymerizing" and "curing" have the same meaning and they are used interchangeable. They refer to a process during which a chemical reaction (such as a reticulation) or physical action (such as evaporation) takes place, resulting in the formation of a polymer with the provision of a harder, tougher, or more stable linkage.

In an embodiment, the process (i") is one wherein the amount of the one or more compounds of formula (II) in the composite formulation is from 5 to 30% by weight; particularly, from 5 to 10% by weight. In an embodiment, the process (I") is one wherein the thermostable polymer is selected from the group consisting of polyacrylic based polymer, epoxy based

polymer, polyurethane based polymer, furan based polymer, phenolic based polymer, benzoxazine based polymer. In an embodiment, the process is one wherein the thermostable polymer is a polyurethane based polymer selected from the group consisting of polyols-polyester, polyols-polyether, polyurethane resins (PUR) and non-isocyanate Polyurethanes (NIPU). Commonly, the process for the preparation of the composite formulation is performed at a temperature from 0 °C to 50 °C and from 5 minutes to 60 minutes; and the curing process is performed at a temperature from 25 °C to 250 °C and from 1 minute to 24 hours. In an embodiment, step (i") is one wherein the thermostable polymer is an epoxy based polymer and the process is performed at a temperature from 0 °C to 30 °C and from 15 minutes to 30 minutes; and the curing process is performed at a temperature from 60 °C to 100 °C and from 6 hours to 10 hours. Step (i") can optionally being performed in the present of a catalyst, a polymerising initiator, one or more excipients or carriers as defined herein below, and mixture thereof.

The process of the invention which further comprises step (i) for the preparation of polymeric formulation (including thermoplastic polymeric formulation and thermostable polymeric formulation) is advantageous because allows preparing a wide variety of low flammability thermoplastic polymeric formulations (mixtures) comprising a low concentration of flame retardants, which is one or more compounds of formula (II), without modifying other of its physicochemical properties.

As it is mentioned above, the polymeric formulations as defined above can comprises one or more carriers and/or excipients. Their presence and their type, as well as their amounts can readily be determined by those skilled in the art according to the field and the type of polymeric formulation being prepared. Examples of appropriate carriers or excipients for the present invention include, but it is not limited, air release agents, mold release agents, pigments, plastifying agents, re-enforcing agents, additional flame retardants, and mixture thereof.

The second aspect of the invention refers to a process for the preparation of a flame retardant polymer made from one or more compounds of formula (II). It means that the one or more compounds of formula (II) are inserted in the backbone of the polymer, providing to it the flame retardant properties. The process of the second aspect of the invention comprises:

(a) preparing a compound of formula (II) following the process as defined in the first aspect of the invention with the proviso that in the compound of formula (II), X comprises a moiety selected from the group consisting of an alkene moiety, an ester moiety, an ether moiety, an amide moiety, a carbonate moiety, a carbamate moiety, alkanoate moiety, carbonate containing moiety, epoxy containing moiety, benzoxazine containing moiety, phenol containing moiety and a mixture thereof;
(b) contacting the compound of formula (II) obtained in step (a) with one or more monomer units different from the one obtained in step (a); and
(c) submitting the mixture thus obtained under such polymerizing conditions to obtain the polymer; and optionally
(d) providing a polymeric formulation containing the polymer obtained in step (c).

The appropriate compound of formula (II), the corresponding monomers and reagents (radical initiator, catalyst, ...), their amounts as well as the experimental process conditions for their preparation, can readily be determined by those skilled in the art according to the field and the type of polymer being prepared.

Methods for the preparation of polymers are known in the state of the art. These methods can be performed by the use of different techniques such as Reactive Extrusion (REX), Particularly, REX method implies a combination of the traditionally separated chemical processes (polymer synthesis and/or modification) and extrusion (melting, blending, structuring, devolatilization and shaping) into a single process carried out onto an extruder, which is used for bulk chemical reaction of monomers. In an embodiment, the process is one wherein the polymer is a polystyrene-based polymer; particularly selected from the group consisting of polystyrene, polystyrene-acrylonitrile (SAN), polyacrylonitrile-butadiene-styrene (ABS).

In an embodiment, the process is one wherein:

the polymer is a polystyrene-acrylonitrile-(SAN) based polymer;
step a) comprises preparing a compound of formula (II) wherein X comprises at least a -($C_2$-$C_6$)alkene moiety, particularly selected from the group consisting of ethylene, propylene, and styrene moiety; and
step b) comprises contacting the compound of formula (II) as defined in step (a) with at least styrene and acrylonitrile.

In an embodiment, the process is one wherein:

the polymer is a polystyrene-acrylonitrile-(SAN) based polymer;
step a) comprises preparing a compound of formula (IIA)-1-6; and
step b) comprises contacting the compound of formula (IIA)-1-6 of step (a) with at least styrene and acrylonitrile.

This process allows preparing a wide variety of low flammability (thermoplastic) polymers comprising low concentration of monomers obtained from the compounds of formula (II) without modifying the physicochemical properties of the polymer. In an embodiment, the process is one wherein the amount of the monomers obtained from the one or more compounds of formula (II) is from 0.5 to 3% by weight in relation to the total weight of the polymer; particularly, from 1 to 2% by weight.

All embodiments mentioned above for the preparation of the compounds of formula (II) as defined in the first aspect of the invention also apply here for the process of the second aspect of the invention. Further, the appropriate monomer units, the compound of formula (II), their amounts as well as the experimental process conditions for their preparation, can readily be determined by those skilled in the art according to the field and the type of polymer being prepared. Commonly, the polymerizing step is performed in the presence of a catalyst and/or a polymerizing initiator agent. The process of the second aspect of the invention also allows preparing a wide variety of low flammability polymers which includes in their structure a low concentration of flame retardants, particularly one or more compounds of formula (II), without modifying other physicochemical properties.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples are provided by way of illustration, and they are not intended to be limiting of the present invention. Furthermore, the present invention covers all possible combinations of particular and preferred embodiments described herein.

Examples

List of abbreviations

DOPO: 6H-dibenzo[c,e][1,2]oxaphosphinine 6-oxide (IA)
BPPO: dibenzo[d,f][1,3,2]dioxaphosphepine 6-oxide (IB)
TEA: triethylamine
DCM: dichloromethane
DCE: dichloroethane
EtOAc: ethyl acetate
ACN: acetonitrile
THF: tetrahydrofuran
mTHF: 2-methyltetrahydrofuran
SAN: styrene acrylonitrile co-polymer

Materials and Instruments

The organic compounds were purchased from Merck KGaA Ltd, with the exception of 6H- dibenzo[c,e][1,2] oxaphosphinine 6-oxide ((IA)-DOPO) purchased from Fluorochem Ltd.; all chemicals were used as received. And dibenzo [d,f][1,3,2]dioxaphosphepine 6-oxide ((IB)-BPPO) synthesized ad described in literature (J. Lenz et al. Tetrahedron, 2019, 75 (9), 1306-1310)

IR spectra were obtained within 4000 and 400 $cm^{-1}$ with a Perkin-Elmer Spectrum One spectrometer. Stable powder samples were dispersed in KBr.

Mono- and bidimensional NMR spectra were registered with the spectrometer Bruker Avance 400, operating at 400.13 MHz proton frequency. The partially deuterated fraction of the solvent was quoted with respect to tetramethylsilane and used as internal reference for $^1H$ and $^{13}C\{^1H\}$ spectra. $^{31}P\{^1H\}$ chemical shifts are reported with respect to 85% $H_3PO_4$, with downfield shifts considered positive. Deuterated solvents were Euriso-Top products.

Analytical Methods

Compounds of formula (II) of the present invention were characterized by spectrometer Bruker Avance 400, operating at 400.13 MHz proton frequency. The partially deuterated fraction of the solvent was quoted with respect to tetramethyl silane and used as internal reference for $^1H$ and $^{13}C$ $\{^1H\}$ spectra. $^{31}P$ $\{^1H\}$ chemical shifts are reported with respect to 85% $H_3PO_4$, with downfield shifts considered positive. Deuterated solvents were Euriso-Top products.

The purity percentage of the compounds of formula (II) of the present invention were calculated on the basis of the $^1H$ and $^{31}P$ $\{^1H\}$ NMR spectra, these last recorded with an inverse-gated decoupling sequence. The purity with respect to

the presence of other P-containing species has been obtained from the integrals of the $^{31}P$ resonances. The total purity of the compounds (II) was determined from the integration of the $^{1}H$ NMR resonances after their assignment.

**1. Compounds of formula (II) of the present invention**

**1.1. Phosphoramidates compounds of formula (II)-1 (X=N)**

**A. General process of the present invention using stoichiometric iodine**

The phosphoramidate compounds of formula (II)-1 of the present invention were prepared following the general process as defined in scheme 1 herein below:

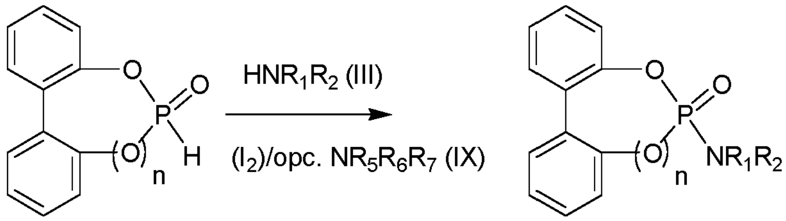


(I) (II)-1

Scheme 1

The compound of formula (I) (1 eq.) and if present the compound of formula (IX) (0-4 eq.) were dissolved in an organic solvent (20 eq.). The compound of formula (III) (2.5-5 eq.) was added to the solution and then, the solid $I_2$ (0.5-3 eq.) was slowly added to the stirred solution. A vigorous reaction took place, accompanied by the precipitation of a solid. The reaction mixture was kept under stirring at room temperature between 30-90 minutes, then the precipitated solid was removed by filtration. And, subsequently, the organic solvent was added to the filtrate and the solid phosphoramidate compound of formula (II)-1 that separated out was collected by filtration and dried under vacuum to yield the dried solid phosphoramidate compound of formula (II)-1.

The specific reaction conditions for the preparation of the phosphoramidate compounds of formula (II)-1 of the present invention, as well as their chemical yield and purity are summarized in Table 1 herein below:

Table 1

| Compound (I) | Compound (III) | | $I_2$ | Organic solvent | Compound (II) | | |
|---|---|---|---|---|---|---|---|
| | type | Eq. | | | N° | Yield (%) w/w | Purity (%) |
| (IA) DOPO | Morpholine | 3 | 1 | $CH_2Cl_2$ | (IIA)-1-1 | 92 | > 95% |
| (IA) DOPO[(a)] | Morpholine | 3 | 0.5 | $CH_2Cl_2$ | (IIA)-1-1 | 40 | > 90% |
| (IA) DOPO | Morpholine | 3 | 1 | AcOEt | (IIA)-1-1 | 71 | > 90% |
| (IA) DOPO | Morpholine | 3 | 1 | $CH_3CN$ | (IIA)-1-1 | 77 | > 90% |
| (IA) DOPO | Morpholine | 3 | 1 | THF | (IIA)-1-1 | 56 | > 90% |
| (IA) DOPO | Morpholine | 3 | 1 | mTHF | (IIA)-1-1 | 63 | > 90% |
| (IA) DOPO | 1-acetyl piperazine | 3 | 1 | $CH_2Cl_2$ | (IIA)-1-2 | 89 | > 95% |
| (IA) DOPO | N-methyl aniline | 3 | 1 | $CH_2Cl_2$ | (IIA)-1-3 | 90 | > 95% |
| (IA) DOPO | Aniline | 3 | 1 | $CH_2Cl_2$ | (IIA)-1-4 | 91 | > 95% |
| (IA) DOPO | 4-methyl aniline | 3 | 1 | $CH_2Cl_2$ | (IIA)-1-5 | 86 | > 95% |
| (IA) DOPO | 4-vinyl aniline | 3 | 1 | $CH_2Cl_2$ | (IIA)-1-6 | 89 | > 95% |
| (IB) BPPO | Morpholine | 3 | 1 | $CH_2Cl_2$ | (IIB)-1-1 | 60 | > 95% |
| [(a)] Time reaction: 3hours | | | | | | | |

The characterization of the phosphoramidates of formulae (IIA)-1-1 to (IIA)-1-6 and (IIB)-1-1 were performed by

NMR as disclosed herein below:

**Phosphoramidates (IIA)-1-1**

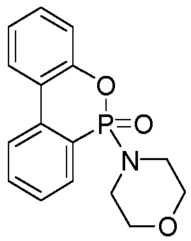

$^1$H NMR (CDCl$_3$, 298 K): δ 8.03 (dd, 1H, arom), 7.96 (dd, 1H, arom), 7.87 (ddd, 1H, arom), 7.71 (d ddd, 1H, arom), 7.53 (tdd, 1H, arom), 7.39 (tdd, 1H, arom), 7.29 - 7.24 (m, 2H, arom), 3.60, 3.25, 3.22 (8H, $A_2BCX$ spin system, O-$CH_{2(A)}$-$CH_{2(B,C)}$-N).

$^{31}$P {$^1$H} NMR (CDCl$_3$, 298 K): δ 14.32 (s).

**Phosphoramidates (IIA)-1-2**

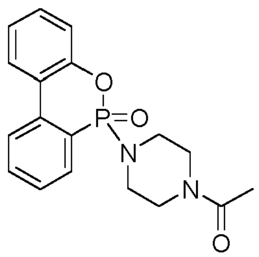

$^1$H NMR (CDCl$_3$, 298 K): δ 8.03 (dd, 1H, arom), 7.97 (dd, 1H, arom), 7.82 (ddd, 1H, arom), 7.72 (dddd, 1H, arom), 7.52 (tdd, 1H, arom), 7.39 (dddd, 1H, arom), 7.30 - 7.22 (m, 2H, arom), 3.60 (m, 2H, N(COMe)-$CH_2$), 3.49 (m, 2H, N(COMe)-$CH_2$), 3.32 (m, 2H, N(P)-$CH_2$), 3.13 (m, 2H, N(P)-$CH_2$), 2.11 (s, 3H, C(O)$CH_3$).

$^{31}$P {$^1$H} NMR (CDCl$_3$, 298 K): δ 14.63 (s).

**Phosphoramidates (IIA)-1-3**

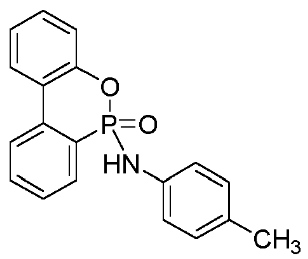

$^1$H NMR (CDCl$_3$, 298 K): δ 7.93 (dd, 1H, arom), 7.87 (dd, 1H, arom), 7.85 (ddd, 1H, arom), 7.61 (dddd, 1H, arom), 7.44 (tdd, 1H, arom), 7.34 (dddd, 1H, arom), 7.25 - 7.16 (m, 6H, arom), 7.05 (m, 1H, arom), 3.21 (d, 3H, $CH_3$).

$^{31}$P {$^1$H} NMR (CDCl$_3$, 298 K): δ 12.21 (s).

**Phosphoramidates (IIA)-1-4**

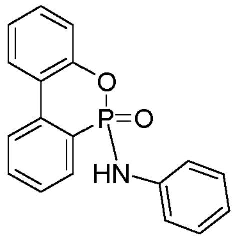

$^1$H NMR ($CDCl_3$, 298 K): δ 8.07 (dd, 1H, arom), 8.04 (dd, 1H, arom), 7.93 (dd, 1H, arom), 7.70 (t, 1H, arom), 7.50 - 7.38 (m, 2H, arom), 7.37 - 7.25 (m, 2H, arom), 7.18 - 6.99 (m, 2H, arom), 6.93 (d, br, 1H, NH), 6.88 (t, 1H, arom), 6.80 (d, 2H, arom).

$^{31}$P {$^1$H} NMR ($CDCl_3$, 298 K): δ 8.84 (s).

**Phosphoramidates (IIA)-1-5**

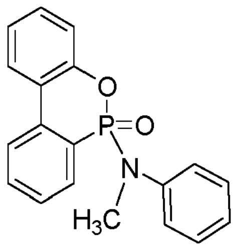

$^1$H NMR ($CDCl_3$, 298 K): δ 8.05 (dd, 1H, arom), 8.02 (dd, 1H, arom), 7.92 (dd, 1H, arom), 7.68 (t, 1H, arom), 7.47 - 7.37 (m, 2H, arom), 7.36 - 7.26 (m, 2H, arom), 6.87 (d, 2H, arom), 6.78 (s, br, 1H, NH), 6.72 (d, 2H, arom), 2.18 (s, 3H, $CH_3$).

$^{31}$P {$^1$H} NMR ($CDCl_3$, 298 K): δ 9.14 (s).

**Phosphoramidates (IIA)-1-6**

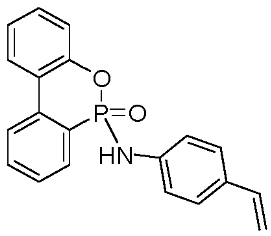

$^1$H NMR ($CDCl_3$, 298 K): δ 8.00 (dd, 1H, arom), 7.95 (dd, 1H, arom), 7.82 (dd, 1H, arom), 7.63 (t, 1H, arom), 7.40 - 7.22 (m, 4H, arom), 7.05 (d, 2H, arom), 6.63 (d, 2H, arom), 6.47 (dd, 1H, CH=), 5.42 (dd, 1H, =$CH_2$), 4.99 (dd, 1H, =$CH_2$)

$^{31}$P {$^1$H} NMR ($CDCl_3$, 298 K): δ 8.94 (s).

**Phosphoramidates (IIB)-1-1**

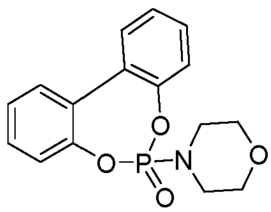

1H NMR ($CDCl_3$, 298 K): δ 7.48 (d, 1H, arom), 7.45 (d, 1H, arom), 7.41 - 7.34 (m, 2H, arom), 7.30 (vt, 1H, arom), 7.27 (m, 1H, arom), 7.24 (vt, 1H, arom), 3.57, 3.10, 3.08 (8H, A2BCX spin system, O-$CH_{2(A)}$-$CH_{2(B,C)}$-N).
31P {1H} NMR (CDCl3, 298 K): δ 10.17 (s).

**B. Comparative process using catalytic iodine**

The specific reaction conditions for the attempts to prepare the phosphoramidate compounds of formula (II) using iodine as a catalyst (being outside the scope of the present invention), using a molar ratio between the compound of formula (I) and iodine of 1 versus lower than 0.5 are summarized in Table 1' herein below:

| Compound (I) | Compound (III) | | $I_2$ | Time (h) | Organic solvent | Compound (II) | |
|---|---|---|---|---|---|---|---|
| | type | Eq. | | | | N° | Yield (%) |
| (IA) DOPO | Morpholine | 3 | 0.05 | 3 | $CH_2Cl_2$ | (IIA)-1-1 | - |
| (IA) DOPO | Morpholine | 3 | 0.05 | 24 | $CH_2Cl_2$ | (IIA)-1-1 | - |

As it is observed in the above results, none of the processes involving the use of iodine as catalyst allows preparing the compounds of (II). Meanwhile, the process of the present invention wherein iodine is used in an stoichiometric amount, allows obtaining a compound of formula (II) in an good chemical yields and high purity (see Table 1).

**C. Comparative process using KI instead of stoichiometric iodine**

A comparative process for the preparation of phosphoramidate compounds of formula (II) using KI in combination with $H_2O_2$ as oxidant following the process disclosed in the JP2001139586 (cited as D1 in the Extended European Search report) instead of stoichiometric iodine as in the present invention are disclosed herein below.

*Using dichloromethane* as *solvent:*

2.16 g (10.0 mmol) of DOPO were suspended at room temperature in 30 mL of $CH_2Cl_2$. Morpholine (2.6 mL, 30.0 mmol) was then added. A catalytic amount of KI as shown in Table below was added to the reaction mixture. $H_2O_2$ 30% (1.1 mL, 10 mmol) was dropwise added. A vigorous reaction started immediately, with formation of a large quantity of white solid material (around 3.1 g) insoluble in dichloromethane. The reaction mixtures were left under stirring without inert atmosphere at room temperature for the time mentioned in Table below. The solid was removed by filtration and cold ethanol (10 mL) was added. No product separated from the solution. The solvent was therefore evaporated again, leaving about 1.3 g of yellowish oil. The NMR spectra in $CDCl_3$ indicated that the residue was composed by unreacted morpholine and that the target compound of formula (II) was absent.

*Using water* as *solvent:*

2.16 g (10.0 mmol) of DOPO were suspended at room temperature in 30 mL of $H_2O$. Morpholine (2.6 mL, 30.0 mmol) was then added. A catalytic amount of KI as shown in Table below was added to the reaction mixture. $H_2O_2$ 30% (1.1 mL, 10 mmol) was dropwise added. DOPO progressively dissolved and the reaction mixture was left under stirring without inert atmosphere, at the temperature and time mentioned in Table below. The solution remained clear, thus an extraction with $CH_2Cl_2$ (3 x 15 mL) was carried out. The organic solution was evaporated and cold ethanol (10 mL) was added. No product separated from the solution. The solvent was therefore evaporated again, leaving traces (about 50 mg) of yellowish oil. The NMR spectra in $CDCl_3$ confirmed the absence of the target compound of formula (II).
The specific reaction conditions for the attempts to prepare the phosphoramidate compounds of formula (II) using KI being outside the scope of the present invention are summarized in Table 3 herein below:

Table 3

| Compound (I) | Compound (III) | | KI[(a)] | $H_2O_2$ (Eq.) | Organic solvent | Time (h) | Temperature (°C) |
|---|---|---|---|---|---|---|---|
| | type | Eq. | | | | | |
| (IA) DOPO | Morpholine | 3 | 1 | 1 | $CH_2Cl_2$ | 3 | r. t. |
| (IA) DOPO | Morpholine | 3 | 1 | 1 | $CH_2Cl_2$ | 24 | r. t. |

(continued)

| Compound (I) | Compound (III) | | KI(a) | $H_2O_2$ (Eq.) | Organic solvent | Time (h) | Temperature (°C) |
|---|---|---|---|---|---|---|---|
| | type | Eq. | | | | | |
| (IA) DOPO | Morpholine | 3 | 2 | 1 | $CH_2Cl_2$ | 3 | r. t. |
| (IA) DOPO | Morpholine | 3 | 2 | 1 | $CH_2Cl_2$ | 24 | r. t. |
| (IA) DOPO | Morpholine | 3 | 1 | 1 | $H_2O$ | 3 | r.t. |
| (IA) DOPO | Morpholine | 3 | 1 | 1 | $H_2O$ | 24 | r.t. |
| (IA) DOPO | Morpholine | 3 | 1 | 1 | $H_2O$ | 6 | 80 |
| (IA) DOPO | Morpholine | 3 | 2 | 1 | $H_2O$ | 3 | r.t. |
| (IA) DOPO | Morpholine | 3 | 2 | 1 | $H_2O$ | 24 | r.t. |
| (IA) DOPO | Morpholine | 3 | 2 | 1 | $H_2O$ | 6 | 80 |

(a) Mas percentage with respect to (IA) DOPO
r.t. stands for room temperature

None of the above disclosed reaction conditions following the teaching of JP2001139586 disclosed in the state of the art allows preparing the compounds of (II). Meanwhile, the process of the present invention wherein iodine is used in an stoichiometric amount, allows obtaining a compound of formula (II) in an good chemical yields and high purity (see Table 1).

**1.2. Phosphoresteres compounds of formula (II)-2 (X=O)**

The phosphorester compounds of formula (II)-2 of the present invention were prepared following the general process as defined in scheme 2 herein below:

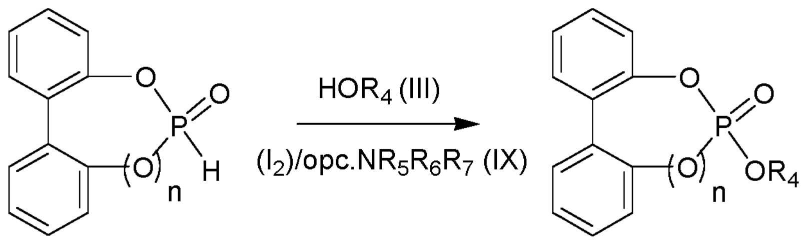


(I) (II)-2

Scheme 2

The compound of formula (I) (1 eq.) and if present the compound of formula (IX) (-4 eq.) were dissolved in an organic solvent (20 eq.). The compound of formula (III) (2.5-5 eq.) was added to the solution and then, the solid $I_2$ (0.5-3 eq.) was slowly added to the stirred solution. A vigorous reaction took place, accompanied by the precipitation of a solid. The reaction mixture was kept under stirring at room temperature between 30-90 minutes, then the precipitated solid was removed by filtration. And, subsequently, the phosphorester compound of formula (II)-2 was purified by extraction with water, then the organic solvent was removed by evaporation. The product thus obtained was collected and dried under vacuum to yield the oil the phosphorester compounds of formula (II)-2.

The specific reaction conditions for the preparation of the phosphorester compounds of formula (IIA)-2-1 to (IIA)-2-3 of the present invention, as well as their chemical yield and purity are summarized in Table 2 herein below:

Table 2

| Compound (I) | Compound (III) | | $I_2$ | Compound (IX) | | Organic solvent | Compound (II) | | |
|---|---|---|---|---|---|---|---|---|---|
| | type | Eq. | | type | Eq. | | N° | Yield (w%) | Purity (%) |
| (IA) DOPO | methanol | 1 | 1 | TEA | 2 | $CH_2Cl_2$ | (IIA)-2-1 | 65 | >95 |
| (IA) DOPO | isopropanol | 1 | 1 | TEA | 2 | $CH_2Cl_2$ | (IIA)-2-2 | 50 | >95 |
| (IA) DOPO | Allyl alcohol | 1 | 1 | TEA | 2 | $CH_2Cl_2$ | (IIA)-2-3 | 50 | >95 |

The characterization of the phosphoramidates of formulae (IIA)-2-1 to (IIA)-2-3 were performed by NMR as disclosed herein below:

**Phosphorester (IIA)-2-1**

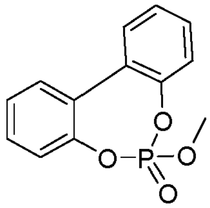

$^1H$ NMR ($CDCl_3$, 298 K): δ 7.98 (ddd, 1H, arom), 7.97 (dd, 1H, arom), 7.94 (dd, 1H, arom), 7.73 (tdd, 1H, arom), 7.52 (tdd, 1H, arom), 7.40 (tdd, 1H, arom), 7.30 - 7.24 (m, 2H, arom), 3.80 (d, 3H, $CH_3$).

$^{31}P$ {$^1H$} NMR ($CDCl_3$, 298 K): δ 11.36 (s)

**Phosphorester (IIA)-2-2**

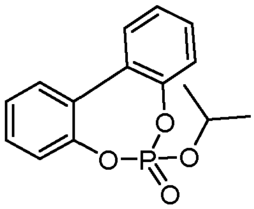

$^1H$ NMR ($CDCl_3$, 298 K): δ 7.94 (ddd, 1H, arom), 7.87 (dd, 2H, arom), 7.66 (tt, 1H, arom), 7.48 - 7.41 (m, 1H, arom), 7.32 (tt, 1H, arom), 7.17 (tdd, 2H, arom), 4.48 (m, 1H, CH), 1.21 (vt, 6H, CH),

$^{31}P$ {$^1H$} NMR ($CDCl_3$, 298 K): δ 10.57 (s)

**Phosphorester (IIA)-2-3**

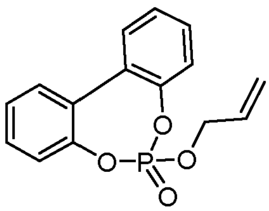

$^1H$ NMR ($CDCl_3$, 298 K): δ 7.94 (ddd, 1H, arom), 7.91 (dd, 1H, arom), 7.88 (dd, 1H, arom), 7.66 (tdd, 1H, arom), 7.46 (tdd, 1H, arom), 7.34 (tdd, 1H, arom), 7.24 - 7.17 (m, 2H, arom), 5.82 (ddt, 1H, $CH_2$-C<u>H</u>), 5.20 (dq, 1H, =$CH_2$), 5.13 (dq, 1H, =$CH_2$), 4.61 (ddt, 2H, C<u>H</u>$_2$- CH).

$^{31}P$ {$^1H$} NMR ($CDCl_3$, 298 K): δ 10.50 (s)

**2. Flame-retardant polymers**

**2.1. Polymer functionalized with DOPO derivatives of formula (II) as pendant groups**

### 2.1.1. SAN-based polymers

A styrene acrylonitrile (SAN)-based polymer of formula (VII) is prepared by polymerizing from 65% to 79.5% by weight of styrene monomer, from 20 to 30% by weight of acrylonitrile, and from 0.5 to 5% by weight of phosphoramidate (IIA)-1-6 of the present invention in relation to the total weight of the mixture as it is shown in scheme 3:

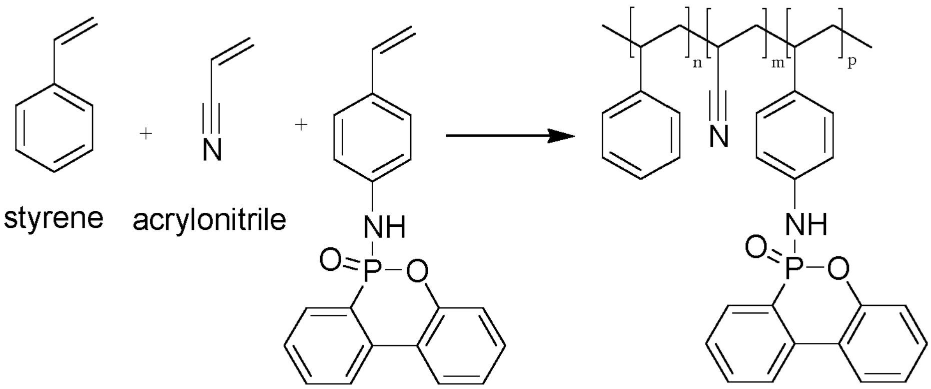


(II)-A-6 SAN-based polymer (VII)

Scheme 3

### Citation List

1. F. R. Atherton et al. J. Chem. Soc., 1945, pp. 660
2. CN108864183A
3. J. Lenz et al. Tetrahedron, 2019, vol. 75(9), pp.1306-1310
4. Phosphorous and Sulphur and the Related Elements, 1988, vol. 37(3-4), pp. 149-157.
5. Green and P. G. M. Wuts, Protective Groups in Organic Chemistry (Wiley, 3rd ed. 1999, Chapter 7, pp. 495-653)
6. JP2001139586

### Claims

**1.** A process for the preparation of a compound of formula (II)

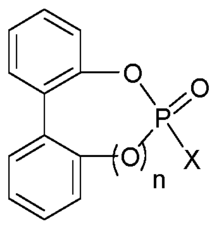

(II)

which comprises contacting a compound of formula (I)

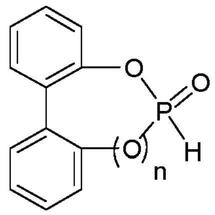

(I)

with a compound of formula (III)

X-H (III)

in the presence of iodine ($I_2$) and air;
and, optionally in the presence of one or more proton scavenger compound (IX)
wherein:

n is an integer selected from 0 and 1;
X is a heteroatom containing moiety, being the heteroatom directly bonded to the P atom;
the heteroatom is selected from the group consisting of N and O;
the molar ratio between (I) and (III) is from 1:1 to 1:5;
if the compound of formula (IX) is present, the molar ratio between (I) and (IX) is from 1:

higher than 0 to 1:4;
being the sum of the mols of the compounds of formula (III) and of the compound of the formula (IX) from 2.5 to 9; and
the molar ratio between (I) and iodine is from 1:0.5 to 1:3.

**2.** The process according to claim 1, wherein:

(a) when n is 0, then the compound of formula (I) is a compound of formula (IA)

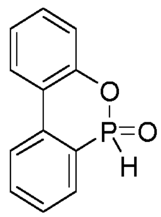

(IA)

and, thereby, the compound of formula (II) is a compound of formula (IIA):

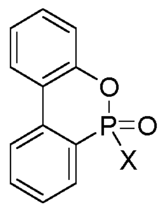

(IIA)

or alternatively,

(b) when n is 1, then the compound of formula (I) is a compound of formula (IB)

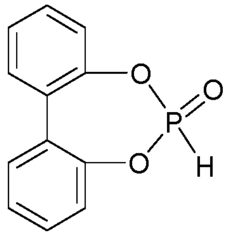

(IB)

And, thereby, the compound of formula (II) is a compound of formula (IIB)

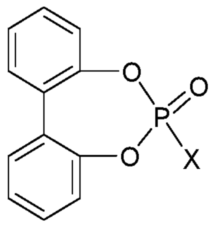

(IIB).

**3.** The process according to any of the claims 1 or 2, wherein:

X is a moiety selected from the group consisting of $-NR_1R_2$ (IV), and $-OR_4$ (V);
$R_1$ is selected from the group consisting of H, $(C_1-C_6)$alkyl; $(C_2-C_6)$alkenyl; $(C_2-C_6)$alkynyl, $(C_1-C_6)$alkylene-Cy1; $(C_2-C_6)$alkenylene-Cy1; $(C_2-C_6)$alkynylene-Cy1; and Cy1; being optionally substituted with one or more groups selected from the group consisting of $(C_1-C_6)$alkyl, $(C_2-C_6)$alkenyl, $(C_2-C_6)$alkynyl, Cy1, -CO-O$(C_1-C_6)$alkyl, -O-$(C_1-C_6)$alkyl, $-CO-NH_2$, $-CO-NHR_8$, -O-CO-O-$(C_1-C_6)$alkyl, -N-CO-O-$(C_1-C_6)$alkyl, acrylate, methacrylate, and -$(C_2-C_6)$epoxy;
$R_2$ is selected from the group consisting of $C_1-C_6$)alkyl; $(C_2-C_6)$alkenyl; $(C_2-C_6)$alkynyl, $(C_1-C_6)$alkylene-Cy1; $(C_2-C_6)$alkenylene-Cy1; $(C_2-C_6)$alkynylene-Cy1; and Cy1; being optionally substituted with one or more groups selected from the group consisting of $(C_1-C_6)$alkyl, $(C_2-C_6)$alkenyl, $(C_2-C_6)$alkynyl, Cy1, -CO-O$(C_1-C_6)$alkyl, -O-$(C_1-C_6)$alkyl, $-CO-NH_2$, $-CO-NHR_8$, -O-CO-O-$(C_1-C_6)$alkyl, -N-CO-O-$(C_1-C_6)$alkyl, acrylate, methacrylate, and -$(C_2-C_6)$epoxy;
or alternatively $R_1$ and $R_2$ together with the nitrogen atom form a Cy2;
$R_4$ is selected from the group consisting of $(C_1-C_6)$alkyl; $(C_2-C_6)$alkenyl; $(C_2-C_6)$alkynyl, $(C_1-C_6)$alkylene-Cy1; $(C_2-C_6)$alkenylene-Cy1; $(C_2-C_6)$alkynylene-Cy1; $(C_2-C_6)$alkylene-O-CO-$(C_2-C_6)$alkenyl; $(C_2-C_6)$alkylene-O-CO-(Cy1); and Cy1; being optionally substituted with one or more groups selected from the group consisting of $(C_1-C_6)$alkyl, $(C_2-C_6)$alkenyl, $(C_2-C_6)$alkynyl, Cy1, -CO-O$(C_1-C_6)$alkyl, -O-$(C_1-C_6)$alkyl, $-CO-NH_2$, $-CO-NHR_8$, -O-CO-O-$(C_1-C_6)$alkyl, -N-CO-O-$(C_1-C_6)$alkyl, acrylate, methacrylate, and -$(C_2-C_6)$epoxy;
Cy1 is a known ring system selected from the group consisting of 5- to 7-membered saturated or partially unsaturated carbocyclic or heterocyclic ring; and 5- or 12-membered carbocyclic or heterocyclic aromatic ring; being optionally substituted with one or more groups selected from the group consisting of $(C_1-C_6)$alkyl, $(C_2-C_6)$alkenyl, $(C_2-C_6)$alkynyl, Cy1, -CO-O$(C_1-C_6)$alkyl, -O-$(C_1-C_6)$alkyl, $-CO-NH_2$, $-CO-NHR_8$, -O-CO-O-$(C_1-C_6)$alkyl, -N-CO-O-$(C_1-C_6)$alkyl, acrylate, methacrylate, and -$(C_2-C_6)$epoxy; and
Cy2 is a known ring system selected from the group consisting of 5- to 7-membered saturated, partially unsaturated, or aromatic heterocyclic ring, being optionally substituted with one or more groups selected from the group consisting of $(C_1-C_6)$alkyl, $(C_2-C_6)$alkenyl, $(C_2-C_6)$alkynyl, Cy1, -CO-O$(C_1-C_6)$alkyl, -O-$(C_1-C_6)$alkyl, $-CO-NH_2$, $-CO-NHR_8$, -O-CO-O-$(C_1-C_6)$alkyl, -N-CO-O-$(C_1-C_6)$alkyl, acrylate, methacrylate, and -$(C_2-C_6)$epoxy; and
$R_8$ is selected from the group consisting of $(C_1-C_6)$alkyl, and amino protecting group.

**4.** The process according to claim 3, wherein X is $-NR_1R_2$ (IV).

**5.** The process according to any of the claims 1-4, wherein:

X is a $-NR_1R_2$ (IV); and $R_1$ and $R_2$ together with the nitrogen atom form a Cy2 as defined in claim 3;
or alternatively, X is a $-NR_1R_2$ (IV); $R_1$ is H, or alternatively $(C_1-C_6)$alkyl; and $R_2$ is Cy1 as defined in claim 3;
or alternatively, X is a $-NR_1R_2$ (IV); and $R_1$ and $R_2$ together with the nitrogen atom form a Cy2 being the Cy2 a 5- to 7-membered saturated or partially unsaturated heterocyclic ring, optionally substituted with one or more groups selected from the group consisting of $C_1-C_6)$alkyl, $(C_2-C_6)$alkenyl, $(C_2-C_6)$alkynyl, Cy1, $-CO-O(C_1-C_6)$alkyl, $-O-(C_1-C_6)$alkyl, $-CO-NH_2$, $-CO-NHR_8$, $-O-CO-O-(C_1-C_6)$alkyl, $-N-CO-O-(C_1-C_6)$alkyl, acrylate, methacrylate, and $-(C_2-C_6)$epoxy; and
or alternatively, X is a $-NR_1R_2$ (IV); $R_1$ is H, or alternatively $(C_1-C_6)$alkyl; and $R_2$ is a Cy1 being the Cy1 a phenyl ring, optionally substituted with one or more groups selected from the group consisting of $C_1-C_6)$alkyl, $(C_2-C_6)$ alkenyl, $(C_2-C_6)$alkynyl, Cy1, $-CO-O(C_1-C_6)$alkyl, $-O-(C_1-C_6)$alkyl, $-CO-NH_2$, $-CO-NHR_8$, $-O-CO-O-(C_1-C_6)$alkyl, $-N-CO-O-(C_1-C_6)$alkyl, acrylate, methacrylate, and $-(C_2-C_6)$epoxy.

**6.** The process according to any of the claims 1-5, wherein the proton scavenger compound (IX) is an amine of formula $NR_5R_6R_7$, wherein:

$R_5$, $R_6$ and $R_7$ are independently selected form the group consisting of H; $(C_1-C_6)$alkyl; $(C_2-C_6)$alkenyl; $(C_2-C_6)$alkynyl, $(C_1-C_6)$alkylene-Cy1; $(C_2-C_6)$alkenylene-Cy1; $(C_2-C_6)$alkynylene-Cy1; and Cy1; being optionally substituted with one or more groups selected from the group consisting of $(C_1-C_6)$alkyl, Cy1, and halogen;
or alternatively, $R_5$, $R_6$ and $R_7$ together with the nitrogen atom form a Cy4 being the Cy4 a ring system comprising from 1 to 3 rings being each of the rings a 5- to 7- membered aromatic ring, optionally substituted with one or more groups selected from the group consisting of $(C_1-C_6)$alkyl, $(C_2-C_6)$alkenyl, $(C_2-C_6)$alkynyl, $(C_1-C_6)$alkyl, $(C_2-C_6)$ alkenyl, $(C_2-C_6)$alkynyl and Cy1;
Cy1 is as defined in any of the claims 1-5; and
with the proviso that at least one of $R_5$, $R_6$ and $R_7$ is other than H.

**7.** The process according to any of the claims 1-6, wherein the molar ratio between (I) and iodine is from 1:0.5 to 1:2; particularly the molar ratio between (I) and iodine is 1:1.

**8.** The process according to any of the claims 1-7, wherein the sum of mols of the compounds of formula (III) and the compound of formula (IX) is from 2.5: to 5.

**9.** The process according to any of the claims 1-8, wherein:

when X is N, then the compound of formula (IX) is not present;
when X is N, then the compound of formula (IX) is present; and
when X is O, then the compound of formula (IX) is present.

**10.** The process according to any of the claims 1-9, which is performed in the presence of one or more solvents selected from the group consisting of halogenated $(C_1-C_6)$alkane, $(C_1-C_4)$alkyl-CO-O-$(C_1-C_4)$ alkyl; $(C_1-C_4)$alkyl-O-$(C_1-C_4)$ alkyl; $(C_1-C_6)$alkane-CN Cy3; wherein: Cy3 is selected from the group consisting of 5- to 7-membered saturated or partially unsaturated heterocyclic ring being at least one of the unit members an Oxygen unit member; being the alkane, the alkyl, and any carbon unit member of Cy3 optionally substituted with one or more groups selected from the group consisting of $(C_1-C_6)$alkyl, $(C_2-C_6)$alkenyl, $(C_2-C_6)$alkynyl, halogen and cyanide;

particularly, the process is performed in the presence of one or more solvents selected from the group consisting of dichloromethane, dichloroethane, ethyl acetate, acetonitrile, tetrahydrofuran, 2-methyltetrahydrofuran, and a mixture thereof; and
more particularly, 2-methyltetrahydrofuran.

**11.** The process according to any of the claims 1-10, which is performed:

at a temperature from 20°C to 50°C for 0.5 min to 3 hours; or alternatively,
at a temperature from 0 °C to 25 °C for 0.5 min to 3 hours.

**12.** The process according to any of the claims 1-11, having a chemical yield equal to or higher than 50% by weight; and particularly, the chemical purity of the compound of formula (II) is equal to or higher than 90% by weight measured by Nuclear Magnetic Spectroscopy.

**13.** The process according to any of the claims 1-12, further comprising and additional step (i) for the preparation of polymeric formulations containing one or more of the compounds of formula (II).

**14.** The process according to claim 13, wherein the amount of the compound of formula (II) in the polymeric formulation is from 5 to 30% by weight.

**15.** A process for the preparation of a flame retardant polymer comprising:

(a) preparing a compound of formula (II) following the process as defined in any of the claims 1-12, wherein X comprises a moiety selected from the group consisting of an alkene moiety, an ester moiety, an ether moiety, an amide moiety, a carbonate moiety, a carbamate moiety, alkanoate moiety, carbonate containing moiety, epoxy containing moiety, benzoxazine containing moiety, phenol containing moiety and mixture thereof;
(b) contacting the compound of formula (II) obtained in step (a) with one or more monomer units different from the one obtained in step (a); and
(c) submitting the mixture thus obtained under such polymerizing conditions to obtain the polymer; and optionally
(d) providing a polymeric formulation containing the polymer obtained in step (c);

particularly, step (b) comprises contacting from 0.1 to 10% by weight of the compound of formula (II) with one or more monomer units.

## Patentansprüche

**1.** Ein Verfahren zur Herstellung einer Verbindung der Formel (II)

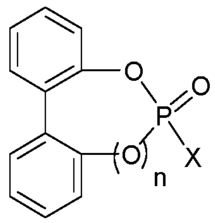

(II)

umfassend das Inkontaktbringen einer Verbindung der Formel (I)

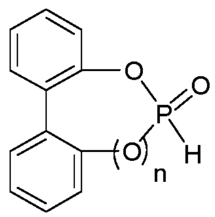

(I)

mit einer Verbindung der Formel (III)

X-H (III)

in Gegenwart von Jod ($I_2$) und Luft;
und gegebenenfalls in Gegenwart von einer oder mehreren Protonenfängerverbindungen (IX) wobei:

n eine ganze Zahl ist, die aus 0 und 1 ausgewählt ist;
X eine Heteroatom enthaltende Gruppierung ist, wobei das Heteroatom direkt an das P-Atom gebunden ist;
das Heteroatom ausgewählt aus der Gruppe bestehend aus N und O ist;
das Molverhältnis von (I) zu (III) von 1: 1 bis 1:5 beträgt;
wenn die Verbindung der Formel (IX) vorhanden ist, das Molverhältnis von (I) zu (IX) von 1:höher als 0 bis 1:4 beträgt;
wobei die Summe der Mole der Verbindungen der Formel (III) und der Verbindung der Formel (IX) von 2,5 bis 9 beträgt; und
das Molverhältnis von (I) zu Jod von 1:0,5 bis 1:3 beträgt.

**2.** Das Verfahren nach Anspruch 1, wobei:

(a) wenn n = 0 ist, dann ist die Verbindung der Formel (I) eine Verbindung der Formel (IA)

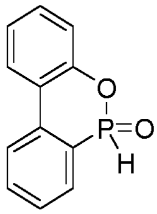

(IA)

und, dadurch, ist die Verbindung der Formel (II) eine Verbindung der Formel (IIA):

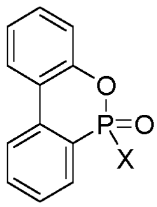

(IIA)

oder, ersatzweise,
(b) wenn n = 1 ist, dann ist die Verbindung der Formel (I) eine Verbindung der Formel (IB)

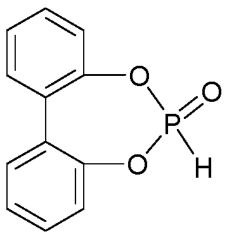

(IB)

und, dadurch, ist die Verbindung der Formel (II) eine Verbindung der Formel (IIB)

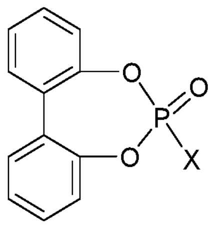

(IIB).

3. Das Verfahren nach einem der Ansprüche 1 oder 2, wobei:

X eine Gruppierung ist, die ausgewählt ist aus der Gruppe bestehend aus $-NR_1R_2$ (IV) und $-OR_4$ (V);
$R_1$ ausgewählt ist aus der Gruppe bestehend aus H, $(C_1-C_6)$Alkyl; $(C_2-C_6)$Alkenyl; $(C_2-C_6)$Alkinyl, $(C_1-C_6)$Alkylen-Cy1; $(C_2-C_6)$-Alkenylen-Cy1; $(C_2-C_6)$Alkinylen-Cy1; und Cy1;
wahlweise substituiert mit einer oder mehreren Gruppen ausgewählt aus der Gruppe bestehend aus $(C_1-C_6)$Alkyl, $(C_2-C_6)$Alkenyl, $(C_2-C_6)$Alkinyl, Cy1, -CO-O$(C_1-C_6)$Alkyl, -O-$(C_1-C_6)$Alkyl, $-CO-NH_2$, $-CO-NHR_8$, -O-CO-O-$(C_1-C_6)$Alkyl, -N-CO-O-$(C_1-C_6)$Alkyl, Acrylat, Methacrylat und -$(C_2-C_6)$Epoxy;
$R_2$ ausgewählt ist aus der Gruppe bestehend aus $(C_1-C_6)$-Alkyl; $(C_2-C_6)$-Alkenyl; $(C_2-C_6)$-Alkinyl, $(C_1-C_6)$Alkylen-Cy1; $(C_2-C_6)$Alkenylen-Cy1; $(C_2-C_6)$Alkinylen-Cy1; und Cy1;
wahlweise substituiert mit einer oder mehreren Gruppen ausgewählt aus der Gruppe bestehend aus $(C_1-C_6)$-Alkyl, $(C_2-C_6)$-Alkenyl, $(C_2-C_6)$-Alkinyl, Cy1, -CO-O$(C_1-C_6)$-Alkyl, - O-$(C_1-C_6)$-Alkyl, $-CO-NH_2$, $-CO-NHR_8$, -O-CO-O-$(C_1-C_6)$-Alkyl, -N-CO-O-$(C_1-C_6)$-Alkyl, Acrylat, Methacrylat und -$(C_2-C_6)$-Epoxy;
oder ersatzweise bilden $R_1$ und $R_2$ zusammen mit dem Stickstoffatom ein Cy2;
$R_4$ ausgewählt ist aus der Gruppe bestehend aus $(C_1-C_6)$-Alkyl; $(C_2-C_6)$Alkenyl; $(C_2-C_6)$Alkinyl, $(C_1-C_6)$Alkylen-Cy1; $(C_2-C_6)$Alkenylen-Cy1; $(C_2-C_6)$Alkinylen-Cy1; $(C_2-C_6)$Alkylen-O-CO-$(C_2-C_6)$-Alkenyl; $(C_2-C_6)$Alkylen-O-CO- (Cy1); und Cy1; wahlweise substituiert mit einer oder mehreren Gruppen ausgewählt aus der Gruppe bestehend aus $(C_1-C_6)$-Alkyl, $(C_2-C_6)$-Alkenyl, $(C_2-C_6)$-Alkinyl, Cy1, -CO-O$(C_1-C_6)$-Alkyl, -O-$(C_1-C_6)$-Alkyl, -CO-$NH_2$, $-CO-NHR_8$, -O-CO-O-$(C_1-C_6)$-Alkyl, -N-CO-O-$(C_1-C_6)$-Alkyl, Acrylat, Methacrylat und -$(C_2-C_6)$-Epoxy;
Cy1 ein bekanntes Ringsystem ist, das ausgewählt ist aus der Gruppe bestehend aus einem 5- bis 7-gliedrigen gesättigten oder teilweise ungesättigten carbocyclischen oder heterocyclischen Ring; und einem 5- oder 12-gliedrigen carbocyclischen oder heterocyclischen aromatischen Ring; das gegebenenfalls mit einer oder mehreren Gruppen substituiert ist, die ausgewählt sind aus der Gruppe bestehend aus $(C_1-C_6)$-Alkyl, $(C_2-C_6)$-Alkenyl, $(C_2-C_6)$-Alkynyl, Cy1, -CO-O$(C_1-C_6)$-Alkyl, -O-$(C_1-C_6)$-Alkyl, $-CO-NH_2$, - $CO-NHR_8$, -O-CO-O-$(C_1-C_6)$-Alkyl, -N-CO-O- $(C_1-C_6)$-Alkyl, Acrylat, Methacrylat und -$(C_2-C_6)$-Epoxy; und
Cy2 ein bekanntes Ringsystem ist, das ausgewählt ist aus der Gruppe bestehend aus einem 5- bis 7-gliedrigen gesättigten, teilweise ungesättigten oder aromatischen heterocyclischen Ring, der gegebenenfalls mit einer oder mehreren Gruppen substituiert ist, die ausgewählt sind aus der Gruppe bestehend aus $(C_1-C_6)$-Alkyl, $(C_2-C_6)$-Alkenyl, $(C_2-C_6)$-Alkinyl, Cy1, -CO-O$(C_1-C_6)$-Alkyl, -O-$(C_1-C_6)$-Alkyl, $-CO-NH_2$, $-CO-NHR_8$, -O-CO-O-$(C_1-C_6)$-Alkyl, -N-CO-O-$(C_1-C_6)$-Alkyl, Acrylat, Methacrylat und -$(C_2-C_6)$-Epoxy; und
$R_8$ ausgewählt ist aus der Gruppe bestehend aus $(C_1-C_6)$-Alkyl und Aminoschutzgruppe.

4. Das Verfahren nach Anspruch 3, wobei X $-NR_1R_2$ (IV) ist.

5. Das Verfahren nach einem der Ansprüche 1 bis 4, wobei:

X ein $-NR_1R_2$ (IV) ist; und $R_1$ und $R_2$ zusammen mit dem Stickstoffatom ein Cy2 wie in Anspruch 3 definiert bilden;
oder ersatzweise X ein $-NR_1R_2$ (IV) ist; $R_1$ = H oder ersatzweise $(C_1-C_6)$-Alkyl ist; und $R_2$ Cy1 ist, wie in Anspruch 3 definiert;
oder ersatzweise X ein $-NR_1R_2$ (IV) ist; und $R_1$ und $R_2$ zusammen mit dem Stickstoffatom einen Cy2 bilden, wobei Cy2 ein 5- bis 7-gliedriger gesättigter oder teilweise ungesättigter heterocyclischer Ring ist, der gegebenenfalls mit einer oder mehreren Gruppen substituiert ist, die ausgewählt sind aus der Gruppe bestehend aus $C_1-C_6)$-Alkyl, $(C_2-C_6)$-Alkenyl, $(C_2-C_6)$-Alkinyl, Cy1, -CO-O$(C_1-C_6)$-Alkyl, -O-$(C_1-C_6)$-Alkyl, $-CO-NH_2$, $-CO-NHR_8$, - O-CO-O-$(C_1-C_6)$-Alkyl, -N-CO-O-$(C_1-C_6)$-Alkyl, Acrylat, Methacrylat und -$(C_2-C_6)$-Epoxy; und
oder ersatzweise X ein $-NR_1R_2$ (IV) ist; $R_1$ = H oder ersatzweise $(C_1-C_6)$-Alkyl ist; und $R_2$ ein Cy1 ist, wobei der Cy1 ein Phenylring ist, der wahlweise mit einer oder mehreren Gruppen substituiert ist, die ausgewählt sind aus der Gruppe bestehend aus $(C_1-C_6)$-Alkyl, $(C_2-C_6)$-Alkenyl, $(C_2-C_6)$-Alkinyl, Cy1, -CO-O$(C_1-C_6)$-Alkyl, -O-$(C_1-C_6)$-Alkyl, $-CO-NH_2$, $-CO-NHR_8$, -O-CO-O-$(C_1-C_6)$-Alkyl, -N-CO-O-$(C_1-C_6)$-Alkyl, Acrylat, Methacrylat

und -($C_2$-$C_6$)-Epoxy.

**6.** Das Verfahren nach einem der Ansprüche 1 bis 5, wobei die Protonenfängerverbindung (IX) ein Amin der Formel $NR_5R_6R_7$ ist, wobei:

$R_5$, $R_6$ und $R_7$ unabhängig voneinander ausgewählt sind aus der Gruppe bestehend aus H; ($C_1$-$C_6$)-Alkyl; ($C_2$-$C_6$)-Alkenyl; ($C_2$-$C_6$)-Alkinyl, ($C_1$-$C_6$)-Alkylen-Cy1; ($C_2$-$C_6$)-Alkenylen-Cy1; ($C_2$-$C_6$)-Alkinylen-Cy1; und Cy1; wahlweise substituiert mit einer oder mehreren Gruppen ausgewählt aus der Gruppe bestehend aus ($C_1$-$C_6$)-Alkyl, Cy1 und Halogen;
oder ersatzweise $R_5$, $R_6$ und $R_7$ zusammen mit dem Stickstoffatom einen Cy4 bilden, wobei das Cy4 ein Ringsystem ist, das 1 bis 3 Ringe umfasst, wobei jeder der Ringe ein 5- bis 7-gliedriger aromatischer Ring ist, der gegebenenfalls mit einer oder mehreren Gruppen substituiert ist, die ausgewählt sind aus der Gruppe bestehend aus ($C_1$-$C_6$)-Alkyl, ($C_2$-$C_6$)-Alkenyl, ($C_2$-$C_6$)-Alkinyl, ($C_1$-$C_6$)-Alkyl, ($C_2$-$C_6$)-Alkenyl, ($C_2$-$C_6$)-Alkinyl und Cy1;
Cy1 wie in einem der Ansprüche 1 bis 5 definiert ist; und
mit der Maßgabe, dass mindestens eines von $R_5$, $R_6$ und $R_7$ von H verschieden ist.

**7.** Das Verfahren nach einem der Ansprüche 1 bis 6, wobei das Molverhältnis von (I) zu Iod von 1:0,5 bis 1:2 beträgt; insbesondere beträgt das Molverhältnis von (I) zu Iod 1:1.

**8.** Das Verfahren nach einem der Ansprüche 1 bis 7, wobei die Summe der Mole der Verbindungen der Formel (III) und der Verbindung der Formel (IX) von 2,5: bis 5 beträgt.

**9.** Das Verfahren nach einem der Ansprüche 1 bis 8, wobei:

wenn X = N ist, dann ist die Verbindung der Formel (IX) nicht vorhanden;
wenn X = N N ist, dann ist die Verbindung der Formel (IX) vorhanden; und
wenn X = O ist, dann ist die Verbindung der Formel (IX) vorhanden.

**10.** Das Verfahren nach einem der Ansprüche 1 bis 9, das in Gegenwart von einem oder mehreren Lösungsmitteln durchgeführt wird, die ausgewählt sind aus der Gruppe bestehend aus halogeniertem ($C_1$-$C_6$)-Alkan, ($C_1$-$C_4$)-Alkyl-CO-O-($C_1$-$C_4$)-Alkyl; ($C_1$-$C_4$)-Alkyl-O-($C_1$-$C_4$)-Alkyl; ($C_1$-$C_6$)-Alkan-CN Cy3; wobei: Cy3 ausgewählt ist aus der Gruppe bestehend aus einem 5- bis 7-gliedrigen gesättigten oder teilweise ungesättigten heterocyclischen Ring, wobei mindestens eines der Einheitsglieder ein Sauerstoffeinheitsglied ist; wobei das Alkan, das Alkyl und ein beliebiges Kohlenstoffeinheitsglied von Cy3 wahlweise mit einer oder mehreren Gruppen substituiert ist, die ausgewählt sind aus der Gruppe bestehend aus ($C_1$-$C_6$)Alkyl, ($C_2$-$C_6$)Alkenyl, ($C_2$-$C_6$)Alkinyl, Halogen und Cyanid;

insbesondere wird das Verfahren in Gegenwart von einem oder mehreren Lösungsmitteln durchgeführt, die aus der Gruppe ausgewählt sind, die aus Dichlormethan, Dichlorethan, Ethylacetat, Acetonitril, Tetrahydrofuran, 2-Methyltetrahydrofuran und einer Mischung davon besteht; und
insbesondere 2-Methyltetrahydrofuran.

**11.** Das Verfahren nach einem der Ansprüche 1 bis 10, welches durchgeführt wird:

bei einer Temperatur von 20 °C bis 50 °C für 0,5 min bis 3 Stunden; oder ersatzweise,
bei einer Temperatur von 0 °C bis 25 °C für 0,5 min bis 3 Stunden.

**12.** Das Verfahren nach einem der Ansprüche 1 bis 11, das eine chemische Ausbeute gleich oder höher als 50 Gew.- % hat; und insbesondere ist die chemische Reinheit der Verbindung der Formel (II), gemessen durch Kernmagnetspektroskopie, gleich oder höher als 90 Gew.- %.

**13.** Das Verfahren nach einem der Ansprüche 1 bis 12, ferner umfassend einen zusätzlichen Schritt (i) zur Herstellung von polymeren Formulierungen, die eine oder mehrere der Verbindungen der Formel (II) enthalten.

**14.** Das Verfahren nach Anspruch 13, wobei die Menge der Verbindung der Formel (II) in der polymeren Formulierung von 5 bis 30 Gew.- % beträgt.

**15.** Ein Verfahren zur Herstellung eines flammhemmenden Polymers, umfassend:

(a) Herstellen einer Verbindung der Formel (II) nach dem Verfahren, wie es in einem der Ansprüche 1 bis 12 definiert ist, wobei X eine Gruppierung umfasst, die aus der Gruppe ausgewählt ist, die aus einer Alkengruppierung, einer Estergruppierung, einer Ethergruppierung, einer Amidgruppierung, einer Carbonatgruppierung, einer Carbamatgruppierung, einer Alkanoatgruppierung, einer Carbonat enthaltenden Gruppierung, einer Epoxy enthaltenden Gruppierung, einer Benzoxazin enthaltenden Gruppierung, einer Phenol enthaltenden Gruppierung und einer Mischung davon besteht;
(b) Inkontaktbringen der in Schritt (a) erhaltenen Verbindung der Formel (II) mit einer oder mehreren Monomereinheiten, die sich von derjenigen unterscheiden, die in Schritt (a) erhalten wurde; und
(c) Unterziehen der so erhaltenen Mischung unter solchen Polymerisationsbedingungen, um das Polymer zu erhalten; und gegebenenfalls
(d) Bereitstellen einer Polymerformulierung, die das in Schritt (c) erhaltene Polymer enthält;

insbesondere, der Schritt (b) umfasst das Inkontaktbringen von 0,1 bis 10 Gew.- % der Verbindung der Formel (II) mit einer oder mehreren Monomereinheiten.

## Revendications

**1.** Un procédé de préparation d'un composé de formule (II)

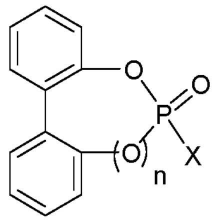

(II)

qui comprend la mise en contact d'un composé de formule (I)

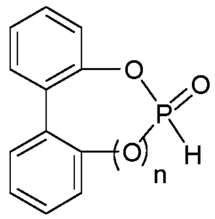

(I)

avec un composé de formule (III)

X-H (III)

en présence d'iode ($I_2$) et d'air ;
et, facultativement, en présence d'un ou de plusieurs composés piégeurs de protons (IX) où :
n est un nombre entier choisi parmi 0 et 1 ;
X est un fragment contenant un hétéroatome, étant l'hétéroatome directement lié à l'atome de P ;
l'hétéroatome est choisi dans le groupe constitué par le N et le O ;
le rapport molaire de (I) à (III) est de 1:1 à 1:5 ;
si le composé de formule (IX) est présent, le rapport molaire de (I) à (IX) est de 1:supérieur à 0 à 1:4 ;
étant la somme des moles des composés de formule (III) et du composé de formule (IX) de 2,5 à 9 ; et
le rapport molaire de (I) au iode est de 1:0,5 à 1:3.

**2.** Le procédé selon la revendication 1, dans lequel

(a) lorsque n est 0, alors le composé de formule (I) est un composé de formule (IA)

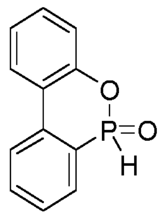

(IA)

et, de ce fait, le composé de formule (II) est un composé de formule (IIA) :

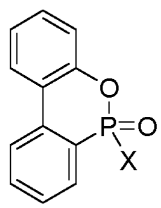

(IIA)

ou, en variante,
(b) lorsque n est 1, alors le composé de formule (I) est un composé de formule (IB)

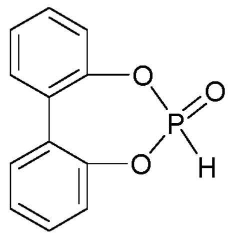

(IB)

et, de ce fait, le composé de formule (II) est un composé de formule (IIB)

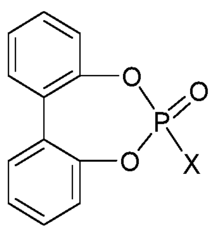

(IIB).

**3.** Le procédé selon l'une quelconque des revendications 1 ou 2, dans lequel :

X est un fragment choisi dans le groupe constitué par $-NR_1R_2$ (IV) et $-OR_4$ (V) ;
$R_1$ est choisi dans le groupe constitué par H, alkyle en ($C_1$-$C_6$) ; alcényle en ($C_2$-$C_6$) ; alcynyle en ($C_2$-$C_6$), alkylène en ($C_1$-$C_6$)-Cy1 ; alcénylène en ($C_2$-$C_6$)-Cy1 ; alcynylène en ($C_{2-6}$)-Cy1 ; et Cy1 ; étant facultativement substitué par un ou plusieurs groupes choisis dans le groupe constitué par alkyle en ($C_1$-$C_6$), alcényle en ($C_2$-$C_6$), alcynyle en ($C_2$-$C_6$), Cy1, -CO-Oalkyle en ($C_2$-$C_6$), -O-alkyle en ($C_2$-$C_6$), $-CO-NH_2$,

-CO-NHR$_8$, -O-CO-O-alkyle en ($C_2$-$C_6$), -N-CO-O-alkyle en ($C_2$-$C_6$), acrylate, méthacrylate et -époxy en ($C_2$-$C_6$) ;
$R_2$ est choisi dans le groupe constitué par alkyle en $C_1$-$C_4$ ; alcényle en ($C_2$-$C_6$) ; alcynyle en ($C_2$-$C_6$), alkylène en ($C_1$-$C_6$)-Cy1 ; alcénylène en ($C_2$-$C_6$)-Cy1 ; alcynylène en ($C_2$-$C_6$)-Cy1 ; et Cy1 ; étant facultativement substitué par un ou plusieurs groupes choisis dans le groupe constitué par alkyle en ($C_1$-$C_6$), alcényle en ($C_2$-$C_6$), alcynyle en ($C_2$-$C_6$), Cy1, -CO-Oalkyle en ($C_2$-$C_6$), -O-alkyle en ($C_2$-$C_6$), -CO-$NH_2$, -CO-NHR$_8$, -O-CO-O-alkyle en ($C_2$-$C_6$), -N-CO-O-alkyle en ($C_2$-$C_6$), acrylate, méthacrylate et -époxy en ($C_2$-$C_6$) ;
ou, en variante, $R_1$ et $R_2$ ensemble avec l'atome d'azote forment un Cy2 ;
$R_4$ est choisi dans le groupe constitué par alkyle en ($C_1$-$C_6$) ; alcényle en ($C_2$-$C_6$) ; alcynyle en ($C_2$-$C_6$), alkylène en ($C_1$-$C_6$)-Cy1 ; alcénylène en ($C_2$-$C_6$)-Cy1 ; alcynylène en ($C_2$-$C_6$)-Cy1 ; alkylène en ($C_2$-$C_6$)-O-CO-alcényle en ($C_2$-$C_6$) ; alkylène en ($C_2$-$C_6$)-O-CO- (Cy1) ; et
Cy1 ; étant facultativement substitué par un ou plusieurs groupes choisis dans le groupe constitué par alkyle en ($C_2$-$C_6$), alcényle en ($C_2$-$C_6$), alcynyle en ($C_2$-$C_6$), Cy1, -CO-O-alkyle en ($C_2$-$C_6$), -O-alkyle en ($C_2$-$C_6$), -CO-$NH_2$, -CO-NHR$_8$, -O-CO-O-alkyle en ($C_2$-$C_6$), - N-CO-O-alkyle en ($C_2$-$C_6$), acrylate, méthacrylate et époxy en ($C_2$-$C_6$) ;
Cy1 est un système cyclique connu choisi dans le groupe constitué par un cycle carbocyclique ou hétérocyclique saturé ou partiellement insaturé de 5 à 7 chaînons ; et un cycle aromatique carbocyclique ou hétérocyclique de 5 ou 12 chaînons ; étant facultativement substitué par un ou plusieurs groupes choisis dans le groupe constitué par alkyle en ($C_1$-$C_6$), alcényle en ($C_2$-$C_6$), alcynyle en ($C_2$-$C_6$), Cy1, -CO-Oalkyle en ($C_1$-$C_6$), - O-alkyle en ($C_2$-$C_6$), -CO-$NH_2$, -CO-NHR$_8$, -O-CO-O-alkyle en ($C_1$-$C_6$), -N-CO-O-alkyle en ($C_1$-$C_6$), acrylate, méthacrylate et -époxy en ($C_2$-$C_6$) ; et
Cy2 est un système cyclique connu choisi dans le groupe constitué par un noyau hétérocyclique saturé, partiellement insaturé ou aromatique de 5 à 7 chaînons, facultativement substitué par un ou plusieurs groupes choisis dans le groupe constitué par un alkyle en ($C_1$-$C_6$), un alcényle en ($C_2$-$C_6$), un alcynyle en ($C_2$-$C_6$), Cy1, -CO-Oalkyle en ($C_1$-$C_6$), -O-alkyle en ($C_2$-$C_6$), -CO-$NH_2$, -CO-NHR$_8$, -O-CO-O-alkyle en ($C_1$-$C_6$), -N-CO-O-alkyle en ($C_1$-$C_6$), acrylate, méthacrylate et -époxy en ($C_2$-$C_6$) ; et
$R_8$ est choisi dans le groupe constitué par alkyle en ($C_1$-$C_6$) et groupe protecteur amino.

**4.** Le procédé selon la revendication 3, dans lequel X est -NR$_1$R$_2$ (IV).

**5.** Le procédé selon l'une quelconque des revendications 1 à 4, dans lequel :

X est un -NR$_1$R$_2$ (IV) ; et $R_1$ et $R_2$ forment ensemble avec l'atome d'azote un Cy2 tel que défini dans la revendication 3 ;
ou, en variante, X est un -NR$_1$R$_2$ (IV) ; $R_1$ est H, ou, en variante, alkyle en ($C_1$-$C_6$) ; et $R_2$ est Cy1 tel que défini dans la revendication 3 ;
ou, en variante, X est un -NR$_1$R$_2$ (IV) ; et $R_1$ et $R_2$ forment ensemble avec l'atome d'azote un Cy2, étant le Cy2 un cycle hétérocyclique saturé ou partiellement insaturé de 5 à 7 chaînons, facultativement substitué par un ou plusieurs groupes choisis dans le groupe constitué par alkyle en ($C_1$-$C_6$), alcényle en ($C_1$-$C_6$), alcynyle en ($C_1$-$C_6$), Cy1, -CO-O-alkyle en ($C_1$-$C_6$), -O-alkyle en ($C_1$-$C_6$), -CO-$NH_2$, -CO-NHR$_8$, -O-CO-O-alkyle en ($C_1$-$C_6$), -N-CO-O-alkyle en ($C_1$-$C_6$), acrylate, méthacrylate et -époxy en ($C_2$-$C_6$) ; et
ou, en variante, X est un -NR$_1$R$_2$ (IV) ; $R_1$ est H, ou, en variante, un alkyle en ($C_1$-$C_6$) ; et
$R_2$ est un Cy1, étant Cy1 un anneau phényle, facultativement substitué par un ou plusieurs groupes choisis dans le groupe constitué par un alkyle en ($C_1$-$C_6$), un alcényle en ($C_2$-$C_6$), un alcynyle en ($C_2$-$C_6$), un Cy1, un -CO-O-alkyle en ($C_1$-$C_6$), un -O-alkyle en ($C_1$-$C_6$), un -CO-$NH_2$, un -CO-NHR$_8$, un -O-CO-O-alkyle en ($C_1$-$C_6$), un -N-CO-O-alkyle en ($C_1$-$C_6$), un acrylate, un méthacrylate et un -($C_2$-$C_6$)époxy.

**6.** Le procédé selon l'une quelconque des revendications 1 à 5, dans lequel le composé piégeur de protons (IX) est une amine de formule NR$_5$R$_6$R$_7$, dans laquelle :

$R_5$, $R_6$ et $R_7$ sont choisis indépendamment dans le groupe constitué par H ; alkyle en ($C_1$-$C_6$) ; alcényle en ($C_2$-$C_6$) ; alcynyle en ($C_2$-$C_6$), alkylène en ($C_1$-$C_6$)-Cy1 ; alcénylène en ($C_2$-$C_6$)-Cy1 ; alcynylène en ($C_2$-$C_6$)-Cy1 ; et Cy1 ; étant facultativement substitués par un ou plusieurs groupes choisis dans le groupe constitué par alkyle en ($C_1$-$C_6$), Cy1 et halogène ;
ou, en variante, $R_5$, $R_6$ et $R_7$ forment ensemble avec l'atome d'azote un Cy4, étant le Cy4 un système cyclique comprenant de 1 à 3 cycles, étant chacun des cycles un cycle aromatique à 5 à 7 chaînons, facultativement substitué par un ou plusieurs groupes choisis dans le groupe constitué par alkyle en ($C_1$-$C_6$), alcényle en ($C_2$-$C_6$), alcynyle en ($C_2$-$C_6$), alkyle en ($C_1$-$C_6$), alcényle en ($C_2$-$C_6$), alcynyle en ($C_2$-$C_6$) et Cy1 ;
Cy1 est tel que défini dans l'une quelconque des revendications 1 à 5 ; et
à condition qu'au moins l'un de $R_5$, $R_6$ et $R_7$ soit autre que H.

**7.** Le procédé selon l'une quelconque des revendications 1 à 6, dans lequel le rapport molaire de (I) au iode est de 1:0,5 à 1:2 ; en particulier le rapport molaire de (I) au iode est de 1:1.

**8.** Le procédé selon l'une quelconque des revendications 1 à 7, dans lequel la somme des moles des composés de formule (III) et du composé de formule (IX) est de 2,5 : à 5.

**9.** Le procédé selon l'une quelconque des revendications 1 à 8, dans lequel :

lorsque X est N, alors le composé de formule (IX) n'est pas présent ;
lorsque X est N, alors le composé de formule (IX) est présent ; et
lorsque X est O, alors le composé de formule (IX) est présent.

**10.** Le procédé selon l'une quelconque des revendications 1 à 9, qui est mis en oeuvre en présence d'un ou de plusieurs solvants choisis dans le groupe constitué par alcane en ($C_1$-$C_6$) halogéné, alkyle en ($C_1$-$C_4$) CO-O-alkyle en ($C_1$-$C_4$) ; alkyl en ($C_1$-$C_4$)-O-alkyle en ($C_1$-$C_4$) ; alcane en ($C_1$-$C_6$)-CN Cy3 ; dans lequel : Cy3 est choisi dans le groupe constitué par un cycle hétérocyclique saturé ou partiellement insaturé de 5 à 7 chaînons, étant au moins l'un des chaînons de l'unité un chaînon d'unité d'oxygène ; étant l'alcane, l'alkyle et tout chaînon d'unité de carbone de Cy3 facultativement substitué par un ou plusieurs groupes choisis dans le groupe constitué par alkyle en ($C_1$-$C_6$), alcényle en ($C_2$-$C_6$), alcynyle en ($C_2$-$C_6$), halogène et cyanure ;

en particulier, le procédé est mis en oeuvre en présence d'un ou de plusieurs solvants choisis dans le groupe constitué par le dichlorométhane, le dichloroéthane, l'acétate d'éthyle, l'acétonitrile, le tétrahydrofurane, le 2-méthyltétrahydrofurane et un mélange de ceux-ci ; et
plus particulièrement, le 2-méthyltétrahydrofurane.

**11.** Le procédé selon l'une quelconque des revendications 1 à 10, qui est mis en oeuvre :

à une température de 20 °C à 50 °C pendant 0,5 min à 3 heures ; ou, en variante,
à une température de 0 °C à 25 °C pendant 0,5 min à 3 heures.

**12.** Le procédé selon l'une quelconque des revendications 1 à 11, ayant un rendement chimique égal ou supérieur à 50 % en poids ; et, en particulier, la pureté chimique du composé de formule (II) est égale ou supérieure à 90 % en poids mesurée par spectroscopie magnétique nucléaire.

**13.** Le procédé selon l'une quelconque des revendications 1 à 12, comprenant en outre une étape supplémentaire (i) pour la préparation de formulations polymères contenant un ou plusieurs des composés de formule (II).

**14.** Le procédé selon la revendication 13, dans lequel la quantité du composé de formule (II) dans la formulation polymère est de 5 à 30 % en poids.

**15.** Un procédé de préparation d'un polymère ignifuge comprenant :

(a) préparer un composé de formule (II) en suivant le procédé tel que défini dans l'une quelconque des revendications 1 à 12, dans lequel X comprend un fragment choisi dans le groupe constitué par un fragment alcène, un fragment ester, un fragment éther, un fragment amide, un fragment carbonate, un fragment carbamate, un fragment alcanoate, un fragment contenant du carbonate, un fragment contenant de l'époxy, un fragment contenant de la benzoxazine, un fragment contenant du phénol et un mélange de ceux-ci ;
(b) mettre en contact le composé de formule (II) obtenu à l'étape (a) avec une ou plusieurs unités monomères différentes de celle obtenue à l'étape (a) ; et
(c) soumettre le mélange ainsi obtenu dans de telles conditions de polymérisation pour obtenir le polymère ; et facultativement
(d) fournir une formulation polymère contenant le polymère obtenu à l'étape (c) ;

en particulier, l'étape (b) comprend la mise en contact de 0,1 à 10 % en poids du composé de formule (II) avec une ou plusieurs unités monomères.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 21383062
- JP 2001139586 B
- CN 108864183 A


### Non-patent literature cited in the description


- **F. R. ATHERTON et al.** *J. Chem. Soc.*, 1945, 660
- **NATCHEV**. *Phosphorous and Sulphur and the Related Elements*, 1988, vol. 37 (3-4), 149-157
- **LENZ et al.** *Tetrahedron*, 2019, vol. 75, 1306-1310
- **GREEN** ; **P. G. M. WUTS**. Protective Groups in Organic Chemistry. Wiley, 1999, 495-653
- **J. LENZ et al.** *Tetrahedron*, 2019, vol. 75 (9), 1306-1310
- *Phosphorous and Sulphur and the Related Elements*, 1988, vol. 37 (3-4), 149-157